# EUROPEAN PATENT APPLICATION

(11) **EP 4 317 029 A1**
(43) Date of publication of application: **07.02.2024**
(21) Application number: 22780565.2
(22) Date of filing: 25.03.2022
(51) Int. Cl.: B65G 1/137, B65G 61/00, G06Q 10/08

(54) **ARTICLE MANAGEMENT SYSTEM, ARTICLE MANAGEMENT METHOD, READING DEVICE, AND INFORMATION PROCESSING DEVICE**

(30) Priority: 31.03.2021 JP 2021061655
(71) Applicant: CANON KABUSHIKI KAISHA, Tokyo 146-8501 (JP)
(72) Inventor: NAKAJIMA, Yuki, Tokyo 146-8501 (JP)
(74) Representative: TBK
(86) International application number: PCT/JP2022/014363
(87) International publication number: WO 2022/210352

(57) **Abstract**

An item management system for managing item data that indicates an entity to which an item belongs among a plurality of entities comprising: a first wireless device installed at a first position; a second wireless device that moves together with the item; at least one reading apparatus that reads identification information stored in a wireless device; and a management unit configured to manage the item data; wherein, in a state where the item data indicates that the item belongs to a second entity related to a second position which is different from the first position, the management unit is configured to update the item data such that the item data indicates that the item belongs to a first entity related to the first position provided that a first reading apparatus has read identification information of the first wireless device and identification information of the second wireless device.

## Description

### TECHNICAL FIELD

The present disclosure relates to an item management system, an item management method, a reading apparatus, and an information processing apparatus.

### BACKGROUND ART

Radio frequency identification (RFID) is a technology that allows information embedded in a small device which is also referred to as a tag to be read by an external reader through short-range wireless communication. For example, an RFID tag in which unique identification information is embedded is attached to an item so that a location of the item can be efficiently known for item stock and distribution management and that visualization of information on managed items becomes easier. Among others, a passive type RFID tag, which transmits information utilizing energy of electromagnetic wave emitted from a reader, does not require a battery, leading to low manufacturing cost and semi-permanent operation. Hence, it has become widely-used not only in the stock and distribution management but also in various applications.

Patent Literature 1 discloses an example of a system which makes use of RFID tags for item management purpose. The system of Patent Literature 1 includes RFID tags attached to items sold in a store, and a rewriting apparatus installed at an exit of the store. When a purchaser of an item passes the exit, the rewriting apparatus reads identification information and price information from the RFID tag of the item and credit information from a credit card of the purchaser to process the payment and rewrite the owner of the item.

### CITATION LIST

### PATENT LITERATURE

PTL 1: Japanese Patent Laid-Open No. 2018-156277

### SUMMARY OF INVENTION

### TECHNICAL PROBLEM

In a situation assumed by Patent Literature 1 where a commercial product is sold, an explicit procedure of payment triggers transfer of an ownership of the commercial product. However, in general situations where an item is transferred between a plurality of entities, an explicit procedure that triggers the transfer is not always present and, even when there is a certain procedure such as inspection, it is desirable to make the procedure more efficient.

In light of the foregoing, the present invention aims at realizing a mechanism to make it possible to efficiently perform transfer of an item between entities.

### SOLUTION TO PROBLEM

According to an aspect, there is provided an item management system for managing item data that indicates an entity to which an item belongs among a plurality of entities comprising: a first wireless device installed at a first position; a second wireless device that moves together with the item; at least one reading apparatus that reads identification information stored in a wireless device; and a management unit configured to manage the item data; wherein, in a state where the item data indicates that the item belongs to a second entity related to a second position which is different from the first position, the management unit is configured to update the item data such that the item data indicates that the item belongs to a first entity related to the first position provided that a first reading apparatus has read identification information of the first wireless device and identification information of the second wireless device. A corresponding method, a reading apparatus and an information processing apparatus are also provided.

According to another aspect, there is provided an item management system for managing item data that indicates an entity to which an item belongs among a plurality of entities comprising: a first wireless device installed at a first position; a second wireless device that moves together with the item; at least one reading apparatus that reads identification information stored in a wireless device; and a management unit configured to manage the item data; wherein, in a state where the item data indicates that the item belongs to a first entity related to the first position, the management unit is configured to update the item data such that the item data indicates that the item belongs to a second entity provided that a second reading apparatus associated with the second entity has read identification information of the first wireless device and identification information of the second wireless device, wherein the second reading apparatus being associated with the second entity includes at least one of: existence of data which associates the second reading apparatus with the second entity, or the second reading apparatus having read identification information of a user device associated with the second entity. A corresponding method, a reading apparatus and an information processing apparatus are also provided.

### ADVANTAGEOUS EFFECTS OF INVENTION

According to the present invention, it will become possible to efficiently perform transfer of an item between entities.

Other features and advantages of the present disclosure will be apparent from the following description taken in conjunction with the accompanying drawings. Note that the same reference numerals denote the same or like components throughout the accompanying drawings.

### BRIEF DESCRIPTION OF THE DRAWINGS

The accompanying drawings, which are incorporated in and constitute a part of the specification, illustrate embodiments of the present disclosure and, together with the description, serve to explain principles of the present disclosure.
FIG. 1 is a schematic view illustrating an example of a configuration of an item management system according to a first embodiment;
FIG. 2 is a block diagram illustrating an example of a configuration of a tag reader according to the first embodiment;
FIG. 3 is a block diagram illustrating an example of a configuration of a management server according to the first embodiment;
FIG. 4A is an explanatory diagram illustrating an example of a configuration of an item table;
FIG. 4B is an explanatory diagram illustrating an example of a configuration of a place table;
FIG. 4C is an explanatory diagram illustrating an example of a configuration of a reader table;
FIG. 4D is an explanatory diagram illustrating an example of a configuration of a user table;
FIG. 5 is an explanatory diagram for explaining an example of a configuration of a reading result table in connection with an inventory operation;
FIG. 6 is an explanatory diagram for explaining examples of configurations of a delivery reservation screen and a delivery reservation table;
FIG. 7 is an explanatory diagram for explaining tag reading at a delivery operation in a first practical example of the first embodiment;
FIG. 8 is an explanatory diagram for explaining update of a delivery status in the first practical example of the first embodiment;
FIG. 9 is an explanatory diagram for explaining tag reading at a delivery operation in a second practical example of the first embodiment;
FIG. 10 is an explanatory diagram for explaining update of a delivery status in the second practical example of the first embodiment;
FIG. 11 is an explanatory diagram for explaining examples of configurations of a pickup reservation screen and a pickup reservation table;
FIG. 12 is an explanatory diagram for explaining tag reading at a pickup operation in the first embodiment;
FIG. 13 is an explanatory diagram for explaining update of a pickup status in the first embodiment;
FIG. 14 is an explanatory diagram illustrating an example of a screen that provides item-related information to a user;
FIG. 15 is a first sequence diagram illustrating an example of a schematic flow of a process within the system;
FIG. 16 is a second sequence diagram illustrating an example of a schematic flow of a process within the system;
FIG. 17 is a third sequence diagram illustrating an example of a schematic flow of a process within the system;
FIG. 18 is a flow chart illustrating an example of a flow of a delivery status update process according to the first practical example of the first embodiment;
FIG. 19 is a flow chart illustrating an example of a flow of a delivery status update process according to the second practical example of the first embodiment;
FIG. 20 is a flow chart illustrating an example of a flow of a pickup status update process according to the first embodiment;
FIG. 21 is a schematic view illustrating an example of a configuration of an item management system according to a second embodiment;
FIG. 22 is a block diagram illustrating an example of a configuration of a management server according to the second embodiment;
FIG. 23 is an explanatory diagram illustrating an example of a configuration of a user tag table;
FIG. 24 is an explanatory diagram for explaining entity determination based on reading of a user tag;
FIG. 25 is an explanatory diagram for explaining tag reading at a delivery operation in the second embodiment;
FIG. 26 is an explanatory diagram for explaining update of a delivery status in the second embodiment;
FIG. 27 is an explanatory diagram for explaining tag reading at a pickup operation in the second embodiment;
FIG. 28 is an explanatory diagram for explaining update of a pickup status in the second embodiment;
FIG. 29 is a flow chart illustrating an example of a flow of a delivery status update process according to the second embodiment;
FIG. 30 is a flow chart illustrating an example of a flow of a pickup status update process according to the second embodiment;
FIG. 31 is a block diagram illustrating an example of a configuration of a tag reader according to an alteration example;
FIG. 32 is a block diagram illustrating an example of a configuration of a management server according to an alteration example; and
FIG. 33 is an explanatory diagram for explaining change of an entity to which an item belongs in an alteration example.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### <1. First Embodiment>

### <1-1. System Overview>

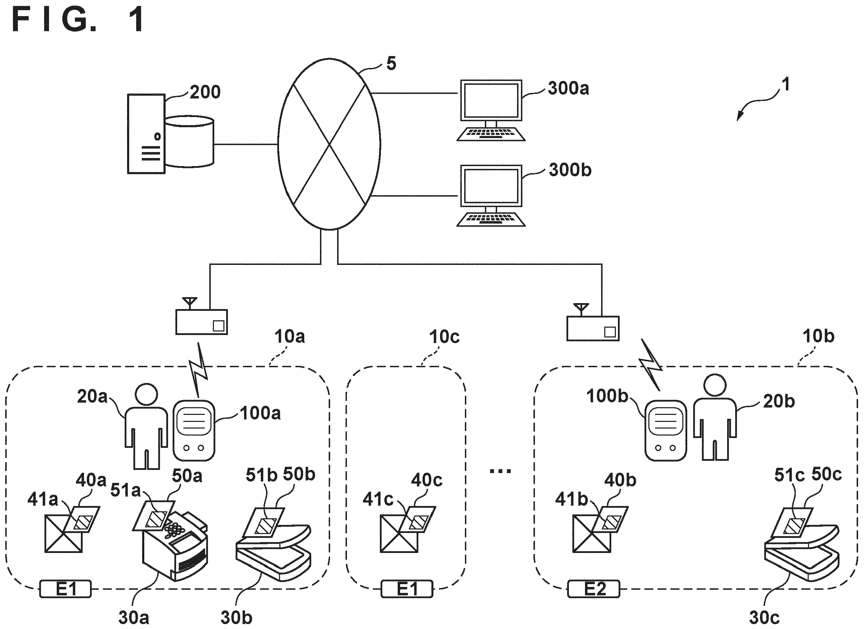

FIG. 1 is a schematic view illustrating an example of a configuration of an item management system 1 according to a first embodiment. The item management system 1 is a system that manages, in a database, item data which indicates an entity to which an item belongs in a situation where the item may be transferred between a plurality of entities. Transfer of an item may be any action that involves transfer of ownership right, use right, information access authority, or management responsibility of an item, for example. Examples of transfer may include sale, assignment, lease, and return with or without charge. An entity may be anything substantive to which an item can belong such as a person, an organization, a company, a department within a company, a geographical section, or the like. Examples of an entity to which an item belongs may include an owner of the item, a user of the item, a manager of the item, a place to store the item, and a location of the item.

An item may be a non-living object (for example, a machine, equipment, a tool, material, consumable goods, a vehicle, or a robot) or a living object (for example, an animal or a plant). Just to mention a few examples, the item management system 1 may be applied to various scenes such as transfers of construction machines between a construction developer and a machinery rental business operator, transfers of business equipment between a company and a leasing business operator, deliveries of goods from a transportation operator to users, assignments of farm animals between farmers, or the like.

The item management system 1 includes position tags 40a, 40b, 40c which are installed at different positions, item tags 50a, 50b, 50c which are attached to items, at least two tag readers 100a, 100b, a management server 200, and user terminals 300a, 300b. It should be noted that, in the following descriptions, the tag readers 100a, 100b are collectively referred to as tag readers 100 by omitting the trailing alphabets from the reference signs when they do not need to be distinguished from each other. The same applies to the position tags 40a, 40b, 40c (position tags 40), the item tags 50a, 50b, 50c (item tags 50), and the user terminals 300a, 300b (user terminals 300), as well as any other constituent elements.

The tag readers 100, the management server 200, and the user terminals 300 are connected to a network 5. The network 5 may be a wired network, a wireless network, or any combination thereof. Examples of the network 5 may include the Internet, an intranet, and a cloud network.

The position tags 40 are wireless devices which are installed in respective possible places where a user may store an item in the item management system 1. FIG. 1 illustrates three places 10a, 10b and 10c where a user may possibly store an item. For example, the place 10a is a warehouse under control of an entity E1 (for example, Company A), the place 10b is a work-site under control of an entity E2 (for example, Company B), and the place 10c is a parking space under control of the entity E1. The position tag 40a is installed at a predetermined position in the warehouse 10a, and has specific tag identification information 41a embedded in the tag. The position tag 40b is installed at a predetermined position in the work-site 10b, and has specific tag identification information 41b embedded in the tag. The position tag 40c is installed at a predetermined position in the parking space 10c, and has specific tag identification information 41c embedded in the tag. The installation position of each position tag 40 may be fixed or can be changed within each place. When a place itself moves (for example, a work-site may move), the corresponding position tag may be relocated in conjunction with the movement of the place.

The item tags 50 are wireless devices which are attached to respective items managed in the item management system 1. FIG. 1 illustrates three items 30a, 30b, and 30c. The item 30a is in the warehouse 10a of the entity E1, and has the item tag 50a attached thereto. The item tag 50a has specific tag identification information 51a embedded in the tag. The item 30b is also in the warehouse 10a of the entity E1, and has the item tag 50b attached thereto. The item tag 50b has specific tag identification information 51b embedded in the tag. The item 30c is in the work-site 10b of the entity E2, and has the item tag 50c attached thereto. The item tag 50c has specific tag identification information 51c embedded in the tag. Each item 30 moves by being conveyed by a user, or moves in accordance with a user operation or autonomously (for example, it runs, walks, flies, or sails). When each item 30 moves, the item tag 50 attached to the item 30 moves together with the item 30.

In the present embodiment, each of the tags such as the position tags 40 and the item tags 50 is assumed to be a passive-type RFID tag (a passive tag). A passive tag is composed of: a small integrated circuit (IC) chip with an embedded memory; and an antenna, and has identification information for identifying the tag and some other information stored in the memory. In this specification, identification information is simply referred to as an ID, and identification information for identifying a tag is referred to as a tag ID. It should be noted that the tag ID may be considered as information for identifying an object to which the tag is attached. The IC chip of a passive tag operates by utilizing energy of an electromagnetic wave emitted from a tag reader, and modulates the information stored in the memory into an information signal to transmit (send back) the information signal from the antenna.

It should be noted that, in another embodiment, each tag may be an active-type RFID tag. If each tag actively (for example, periodically) transmits information to its vicinity by utilizing power from a built-in battery, such a tag may be called a beacon tag. In a further embodiment, each tag may be a wireless device which sends back information in response to a signal from a reader in accordance with Near Field Communication (NFC) protocol or Bluetooth (registered trademark) protocol, for example. Each tag may have any name such as an IC tag, an IC card, or a responder.

The tag reader 100 is a reading apparatus that reads information from the RFID tags. The tag reader 100 performs reading periodically or in response to a certain trigger such as a user operation, and transmits a tag reading result to the management server 200. The tag reader 100 may be capable of communicating with the management server 200 directly or indirectly via a certain relay apparatus. FIG. 1 illustrates the tag reader 100a used by a user 20a, and the tag reader 100b used by a user 20b. An example of a particular configuration of the tag reader 100 will be further described later.

The management server 200 is an information processing apparatus that manages item data indicating to which entity among two or more entities each item 30 belongs. The management server 200 may be implemented as an application server, a database server, or a cloud server by using a high-end general-purpose computer, for example. The management server 200 receives tag reading results from respective tag readers 100, and updates the item data such that it reflects the latest management statuses of the respective items 30 based on the received tag reading results. The management server 200 also has an information provision function to provide a user with item-related information. The item-related information is typically provided to a user on a screen of the user terminal 300. An example of a particular configuration of the management server 200 will be further described later.

In the example in FIG. 1, the management server 200 is a cloud server deployed in a cloud environment. Though a single management server 200 is illustrated in FIG. 1, the item management function of the management server 200, which will be described in detail later, may be provided by a single apparatus or by physically-separate multiple apparatuses which operate in conjunction with each other. In addition, though an example where the management server 200 maintains a database including the item data will be described in the present embodiment, an apparatus other than the management server 200 may maintain a part or all of the database. For example, a part of data may be maintained by a wireless device (for example, a position tag or an item tag) or by a tag reader.

The user terminal 300 is a terminal apparatus that is utilized by a user of the item management system 1. The user terminal 300 may be a general-purpose terminal such as a personal computer (PC) or a smartphone, or a dedicated terminal specialized for an item management purpose. The user terminal 300 typically comprises an input device that receives user inputs, a communication interface that communicates with other apparatuses (for example, the management server 200), and a display device that displays information. As an example, the user terminal 300 is utilized by a user to make inquiries to the management server 200 about the item-related information. As another example, the user terminal 300 is utilized by a user to input reservation of an operation to transfer an item between entities. Examples of user interfaces provided by the user terminal 300 to a user in these situations will further be described later.

It should be noted that, though FIG. 1 illustrates the tag reader 100 and the user terminal 300 as separate apparatuses, there may be provided an integrated apparatus which has both of functionalities of the tag reader 100 and the user terminal 300. Moreover, the user terminal 300 may have a relay function to relay communication between the tag reader 100 and the management server 200.

### <1-2. Configuration Example of Tag Reader>

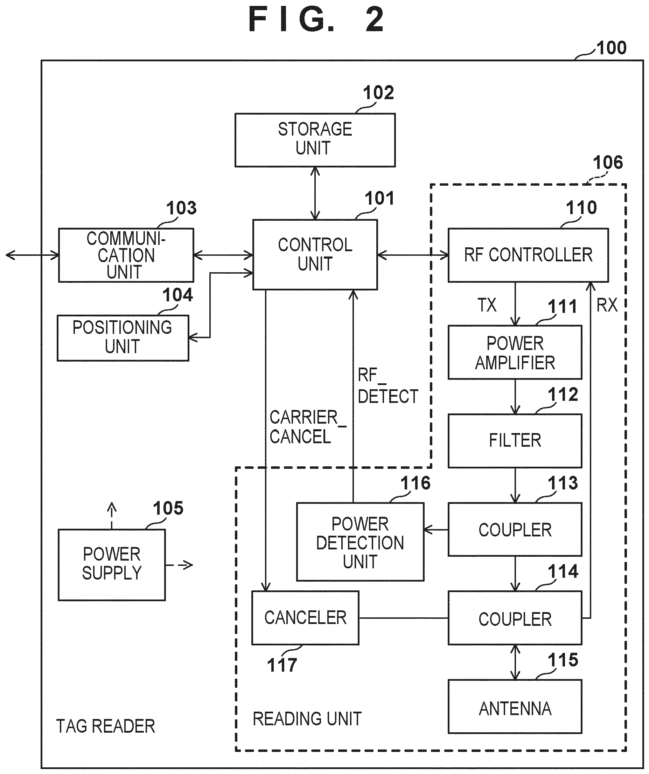

FIG. 2 is a block diagram illustrating an example of a configuration of the tag reader 100 according to the first embodiment. With reference to FIG. 2, the tag reader 100 comprises a control unit 101, a storage unit 102, a communication unit 103, a positioning unit 104, a power supply 105, and a reading unit 106.

The control unit 101 consists of a memory to store computer programs, and one or more processors (for example, central processing units (CPUs)) to execute the computer programs. The control unit 101 controls overall functionality of the tag reader 100 described in this specification. For example, the control unit 101 causes the reading unit 106 to perform reading from an RFID tag within a tag reading range, and causes the storage unit 102 to temporarily store the read information and the time of the reading as reading result data. The control unit 101 may cause the positioning unit 104 to perform positioning of the current position, and add coordinates indicative of the current position to the reading result data. Then, the control unit 101 transmits, to the management server 200 via the communication unit 103, the reading result data stored in the storage unit 102 together with the reader identification information of the tag reader 100.

The storage unit 102 may include any kind of storage medium such as a semiconductor memory (e.g. a read only memory (ROM), a random access memory (RAM), and the like), an optical disk, or a magnetic disk, for example. In the present embodiment, the storage unit 102 stores the above-described reading result data, the result of positioning by the positioning unit 104, and the reader identification information of the tag reader 100.

The communication unit 103 is a communication interface for the tag reader 100 to communicate with the management server 200. For example, the communication unit 103 may be a wireless local area network (WLAN) interface that communicates with a WLAN access point, or a cellular communication interface that communicates with a cellular base station. Alternatively, the communication unit 103 may be a connection interface (e.g. a Bluetooth (registered trademark) interface or a universal serial bus (USB) interface) for connection with a relay apparatus (for example, a mobile terminal carried by the user 20).

The positioning unit 104 is a positioning module that measures or estimates the current position of the tag reader 100. The positioning unit 104 may measure a relative movement from a reference position using, for example, a triaxial accelerometer, a gyroscope sensor, and a geomagnetic sensor, and calculate positional coordinates of the current position by adding the relative movement to known coordinates of the reference position. Herein, the reference position may be the position of the position tag 40, for example. Alternatively, the positioning unit 104 may be a GPS module that measures the current geographical position of the tag reader 100 by utilizing the global positioning system (GPS). Alternatively, the positioning unit 104 may be a positioning module that performs a base station positioning or a wireless LAN positioning to estimate the current position by utilizing known positional coordinates of a base station or a wireless LAN access point to which an apparatus is connected. The positioning unit 104 outputs, to the control unit 101, two-dimensional or three-dimensional positional coordinates which indicate the current position of the tag reader 100 obtained as the result of positioning.

The power supply 105 includes a battery and a DC-DC converter, and supplies power for operating electronic circuits of the control unit 101, the storage unit 102, the communication unit 103, the positioning unit 104 and the reading unit 106 of the tag reader 100. The battery may include a primary cell, or a rechargeable secondary cell. Although not illustrated in the figure, the tag reader 100 may have a connection terminal to connect the tag reader 100 to an external power source for recharging the power supply 105.

The reading unit 106 is a reading module that is capable of reading, from the position tags 40 installed at the respective positions in the item management system 1 and the item tags 50 that move together with the items 30, identification information stored in respective RFID tags. With reference to FIG. 2, the reading unit 106 includes an RF controller 110, a power amplifier 111, a filter 112, a first coupler 113, a second coupler 114, an antenna 115, a power detector 116, and a canceler 117. The RF controller 110 outputs a transmission signal (for example, a signal modulated in the UHF band) from a TX terminal to the power amplifier 111 in accordance with control by the control unit 101. The power amplifier 111 amplifies the transmission signal input from the RF controller 110 to output it to the filter 112. The filter 112 may be a low-pass filter, for example, and filters out unnecessary low frequency components from the transmission signal amplified by the power amplifier 111. The first coupler 113 distributes the transmission signal that has passed the filter 112 to the coupler 114 and the power detector 116. The second coupler 114 outputs the transmission signal input from the first coupler 113 to the antenna 115, and outputs a received signal input from the antenna 115 to the RF controller 110. The antenna 115 transmits the transmission signal input from the coupler 114 to the air as an electromagnetic wave. Further, the antenna 115 receives a signal that has been sent back from an RFID tag that exists within the reading range of the tag reader 100 in response to the transmission signal, and outputs the received signal to the coupler 114. The power detector 116 detects a power level of the signal input from the first coupler 113, and outputs a signal 'RF_DETECT' indicative of the detected power level to the control unit 101. The canceler 117 receives a signal 'CARRIER_CANCEL' indicative of a power level of a carrier from the control unit 101. Then, the canceler 117 extracts an intended signal component of the received signal to be output to an RX terminal of the RF controller 110 by canceling the carrier component of the transmission signal based on the CARRIER_CANCEL. The RF controller 110 demodulates the signal input from the RX terminal to obtain the tag ID and other information sent back from the RFID tag, and outputs the obtained information to the control unit 101.

In the present embodiment, the reading unit 106 can attempt tag reading periodically (for example, once per second) without requiring any explicit command from a user. Transmission of the reading result data from the communication unit 103 to the management server 200 can also be performed periodically (for example, every few seconds) or whenever the tag reading is done without requiring any explicit command from a user. The control unit 101 may exclude, from the reading result data to be transmitted, the same record as the most recent record that has already been transmitted in a predetermined time period to omit redundant data transmission and reduce a communication load. It should be noted that, in another embodiment, one or both of an attempt of tag reading by the reading unit 106 and transmission of the reading result data to the management server 200 may be performed in response to a user input via a certain user interface arranged in the tag reader 100. In a case where the communication unit 103 performs communication with the management server 200 indirectly via a relay apparatus, the transmission of the reading result data to the management server 200 may be performed only while there is an effective connection between the communication unit 103 and the relay apparatus.

### <1-3. Configuration Example of Management Server>

### <1-3-1. Basic Configuration>

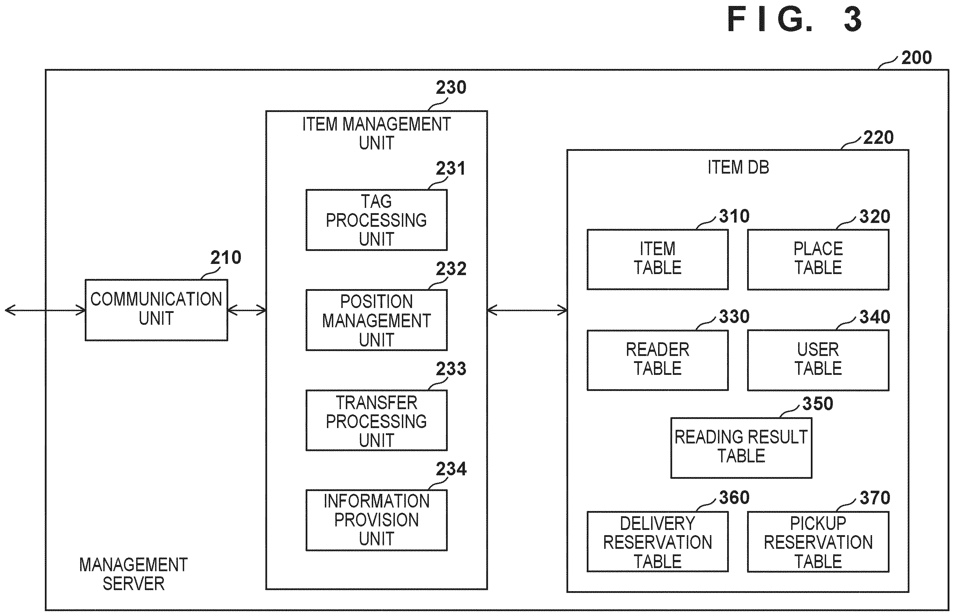

FIG. 3 is a block diagram illustrating an example of a configuration of the management server 200 according to the first embodiment. With reference to FIG. 3, the management server 200 comprises a communication unit 210, an item database (DB) 220, and an item management unit 230.

The communication unit 210 is a communication interface for the management server 200 to communicate with other apparatuses. The communication unit 210 may be a wired communication interface or a wireless communication interface. In the present embodiment, the communication unit 210 communicates with the tag readers 100 and the user terminals 300 within the item management system 1. The item DB 220 consists of tables for managing data indicating to which entity each of the items under the management of the system belongs. In the present embodiment, the item DB 220 includes an item table 310, a place table 320, a reader table 330, a user table 340, a reading result table 350, a delivery reservation table 360, and a pickup reservation table 370. The item management unit 230 is a set of software modules that provide item management functions for managing data within the item DB 220. The individual software modules can run by one or more processors (not shown) of the management server 200 executing computer programs stored in a memory (not shown). In the present embodiment, the item management unit 230 includes a tag processing unit 231, a position management unit 232, a transfer processing unit 233, and an information provision unit 234.

### <1-3-2. Examples of Master Data>

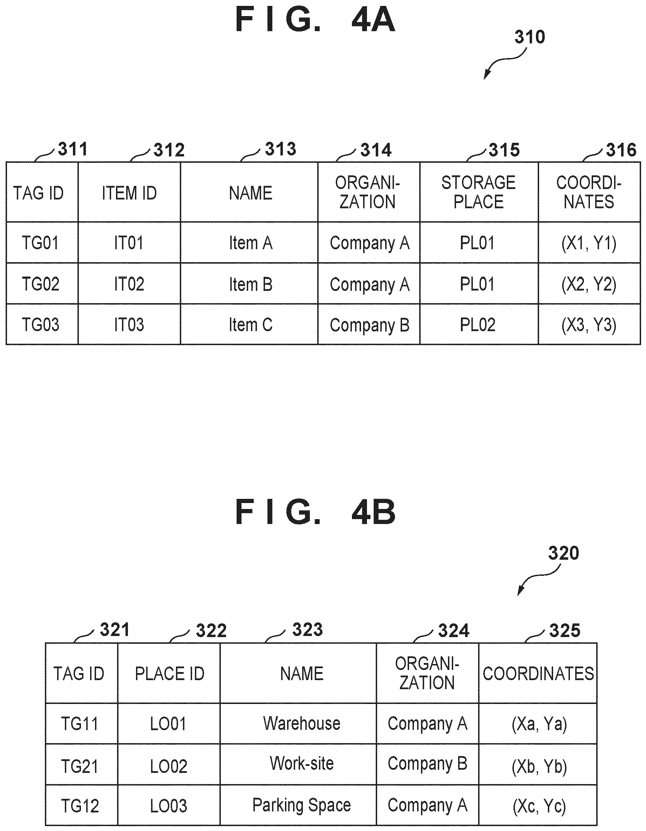

The item table 310, the place table 320, the reader table 330 and the user table 340 in the item DB 220 are tables that serve as so-called master data registered in the item DB 220 in advance. FIGs. 4A to 4D illustrate respective configuration examples of these tables.

The item table 310 has five data elements including Tag ID 311, Item ID 312, Name 313, Organization 314, Storage Place 315, and Coordinates 316. Tag ID 311 is identification information that uniquely identifies an item tag 50 attached to each of items under the management of the system. The value of Tag ID 311 is the same as the value of the tag ID stored within the corresponding item tag 50. Item ID 312 is identification information that uniquely identifies each item. Name 313 represents a name of each item. In the example of FIG. 4A, the item identified by Item ID 'IT01' has the name 'Item A', the item identified by Item ID 'IT02' has the name 'Item B', and the item identified by Item ID 'IT03' has the name 'Item C'. 'Item A', 'Item B', and 'Item C' here correspond respectively to the items 30a, 30b, and 30c illustrated in FIG. 1. Organization 314 represents the entity to which each item belongs. Herein, it is assumed that each item belongs to an entity which has responsibility for managing the item. In the example of FIG. 4A, 'Company A' has management responsibility for 'Item A' and 'Item B' while 'Company B' has management responsibility for 'Item C'. 'Company A' and 'Company B' here correspond respectively to the entities E1 and E2 described in connection with FIG. 1. The value of Organization 314 may be changed by the transfer processing unit 233 in response to transfer of an item as will be described later. Storage Place 315 represents a place where each item is stored using a place ID which identifies the place. In the example of FIG. 4A, 'Item A' and 'Item B' are stored in the place identified by the place ID 'PL01'. 'Item C' is stored in the place identified by the place ID 'PL02'. Coordinates 316 represents the latest positional coordinates at which each item is located. The values of Storage Place 315 and Coordinates 316 may be updated by the position management unit 232 when the tag reader 100 has detected a movement of an item as will be described later.

The place table 320 has five data elements including Tag ID 321, Place ID 322, Name 323, Organization 324, and Coordinates 325. Tag ID 321 is identification information that uniquely identifies a position tag 40 installed in each of the places under the management of the system. The value of Tag ID 321 is the same as the value of the tag ID stored within the corresponding position tag 40. Place ID 322 is identification information that uniquely identifies each place. Name 323 represents a name of each place. In the example of FIG. 4B, the name of the place identified by Place ID 'PL01' is 'Warehouse', the name of the place identified by Place ID 'PL02' is 'Work-site', and the name of the place identified by Place ID 'PL03' is `Parking Space'. 'Warehouse', 'Work-site', and `Parking Space' here correspond respectively to the places 10a, 10b, and 10c illustrated in FIG. 1. Organization 324 represents the entity which has responsibility for managing each place. In the example of FIG. 4B, 'Company A' has management responsibility for 'Warehouse' and `Parking Space' while 'Company B' has management responsibility for 'Work-site'. Coordinates 325 represents the positional coordinates of the position tag 40 installed in each place.

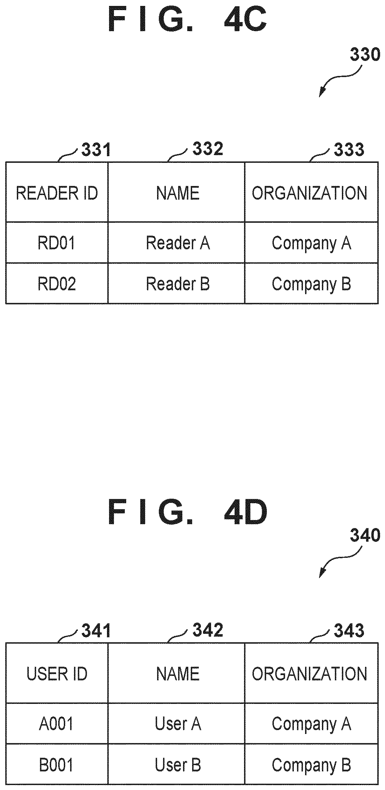

The reader table 330 has three data elements including Reader ID 331, Name 332, and Organization 333. Reader ID 331 is identification information that uniquely identifies each of the tag readers 100 utilized in the system. Name 332 represents a name of each reader. In the example of FIG. 4C, the name of the tag reader 100 identified by Reader ID 'RD01' is 'Reader A', and the name of the tag reader 100 identified by Reader ID 'RD02' is 'Reader B'. 'Reader A' and 'Reader B' here correspond respectively to the tag readers 100a and 100b illustrated in FIG. 1. Organization 333 represents the entity which has responsibility for managing each tag reader. In the example of FIG. 4C, 'Company A' has management responsibility for 'Reader A' while 'Company B' has management responsibility for 'Reader B'.

The user table 340 has three data elements including User ID 341, Name 342, and Organization 343. User ID 341 is identification information that uniquely identifies each of the users 20 who utilize the item management system 1. Name 342 represents a name of each user. In the example of FIG. 4D, the name of the user identified by User ID 'A001' is 'User A', and the name of the user identified by User ID 'B001' is 'User B'. 'User A' and 'User B' here correspond respectively to the users 20a and 20b illustrated in FIG. 1. Organization 343 represents an organization to which each user belongs. In the example of FIG. 4D, 'User A' belongs to 'Company A' while 'User B' belongs to 'Company B'.

### <1-3-3. Awareness of Item Storage Status>

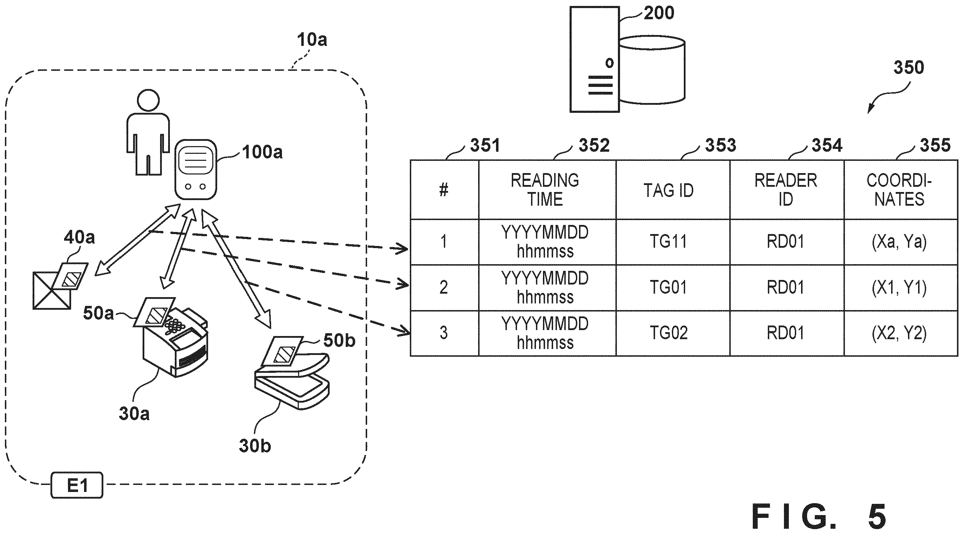

The tag processing unit 231 of the item management unit 230 adds, to the reading result table 350, reading result data received from each of the tag readers 100 via the communication unit 210. Herein, an inventory operation, which is a kind of operation during which the reading result data is created, is taken as an example to describe a configuration example of the reading result data stored in the reading result table 350 using FIG. 5.

In the left side of FIG. 5, it is illustrated that a user who carries the tag reader 100a visits the place 10a under the management of the entity E1 for an inventory operation. When the position tag 40a has come within the reading range of the tag reader 100a, the tag reader 100a reads the tag ID 'TG1 1' of the position tag 40a. When the item tag 50a of the item 30a has come within the reading range, the tag reader 100a reads the tag ID 'TG01' of the item tag 50a. When the item tag 50b of the item 30b has come within the reading range, the tag reader 100a reads the tag ID 'TG02' of the item tag 50b. When a transmission timing of reading result data arrives, the tag reader 100a transmits the reading result data indicative of the tag reading result (including three records here) to the management server 200. The tag processing unit 231 adds, to the reading result table 350, the three records of the reading result data received via the communication unit 210.

With reference to FIG. 5, the reading result table 350 has five data elements including Record Number 351, Reading Time 352, Tag ID 353, Reader ID 354, and Coordinates 355. In the following descriptions, a record indicating a record number of'N' is referred to as a record #N (N is an integer). The record #1 of the reading result table 350 indicates that the tag reader 100a identified by Reader ID 'RD01' has read the position tag 40a identified by the tag ID 'TG11', and that the positional coordinates at that time were (Xa, Ya). The record #2 indicates that the tag reader 100a has read the item tag 50a identified by the tag ID 'TG01', and that the positional coordinates at that time were the coordinates of (X1, Y1). The record #3 indicates that the tag reader 100a has read the item tag 50b identified by the tag ID 'TG02', and that the positional coordinates at that time were the coordinates of (X2, Y2). In the present embodiment, the tag IDs and other information read by each tag reader 100 are collected and stored by the management server 200 in this way without any explicit user's command. As such, the management server 200 can easily become aware of which place under management stores which item without imposing cumbersome operations on the users.

After adding a record of reading result data received from the tag reader 100 to the reading result table 350, the tag processing unit 231 invokes the position management unit 232. The position management unit 232 updates the values of Coordinates 316 of the corresponding item in the item table 310 with the latest positional coordinates of the item tag 50 indicated by the record added to the reading result table 350. Further, the position management unit 232 determines correspondence between the tag ID of the position tag 40 and the tag ID of the item tag 50 based on temporal correlation between corresponding records of the multiple reading results received from the same reading apparatus. For example, the position management unit 232 knows, from the records #1 and #2 illustrated in FIG. 5, that the tag reader 100a has read the tag ID 'TG11' of the position tag 40a and the tag ID 'TG01' of the item tag 50a within a predetermined interval (for example, several seconds to several minutes). Thus, the position management unit 232 becomes aware that the item 30a is stored in the place 10a in which the position tag 40a is installed, and updates the value of Storage Place 315 of the item 30a (associated with the tag ID 'TG01') of the item table 310 into the place ID 'PL01'. Similarly, the position management unit 232 becomes aware, from the records #1 and #3 illustrated in FIG. 5, that the item 30b is also stored in the place 10a, and updates the value of Storage Place 315 of the item 30b of the item table 310 into the place ID 'PL01'. It should be noted that, if each item 30 has not moved, the value of Storage Place 315 is of course unchanged and the update of the value may be skipped in this case.

In this way, the item management unit 230 maintains the data within the item DB 220 such that it reflects the latest status regarding in which place each item 30 under the management of the system is currently stored and at which coordinates each item 30 is located.

### <1-3-4. Transfer of Item (Change of Entity to which Item Belongs)>

In the previous section, a process of simply tracking movement of an item within the same entity has been described. Next, in this section, how to handle transfer of ownership right, use right, information access authority, or management responsibility of an item, that is, transfer of an item between entities will be described. Herein, two types of operation models including item delivery and item pickup will be mainly described as operations to transfer items. The item delivery refers to an operation where a person-in-charge of a transfer source entity for an item moves (for example, transports) the item to a place related to a transfer destination entity. The item pickup refers to an operation where a person-in-charge of a transfer destination entity for an item visits a place related to a transfer source entity to pick up the item. It should be noted that these names of operation models are mere examples and any name other than "delivery" and "pickup" may be used.

In the present embodiment, the transfer processing unit 233 receives in advance, for both of the delivery and the pickup, reservation information which indicates that the operation to transfer an item 30 will be carried out. Then, the transfer processing unit 233 changes the entity to which the item 30 belongs in the item DB 220 based on a result of reading by at least one tag reader 100 and the received reservation information.

### (1) Reception of Delivery Reservation

The transfer processing unit 233 causes the display device of the user terminal 300 to display a delivery reservation screen which provides a user interface (UI) for receiving a reservation of a delivery operation. The transfer processing unit 233 stores delivery reservation information received via the delivery reservation screen in the delivery reservation table 360 of the item DB 220.

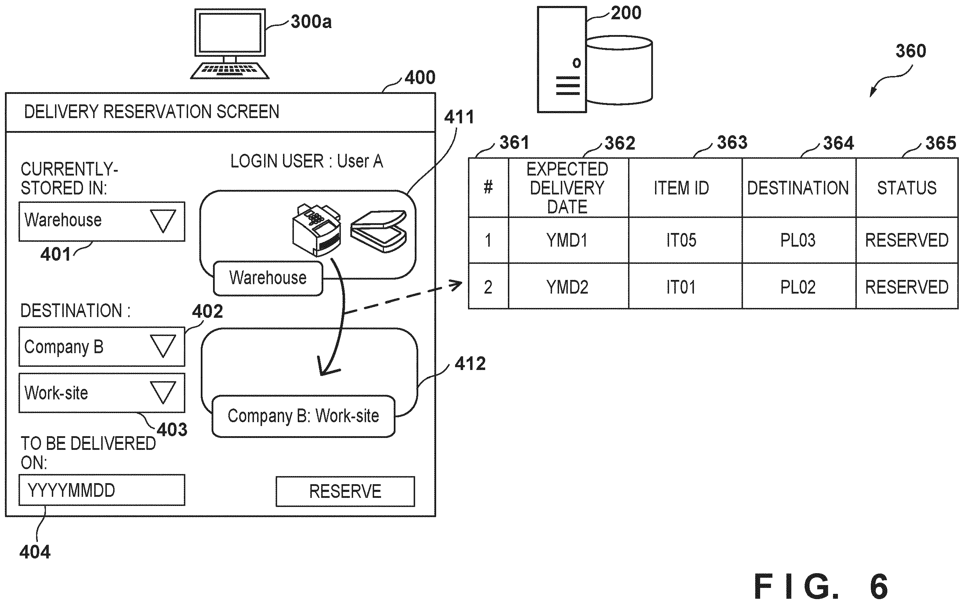

FIG. 6 is an explanatory diagram for explaining examples of configurations of the delivery reservation screen and the delivery reservation table. Herein, it is assumed that the user 20a utilizing the user terminal 300a logs in to the system and performs a delivery reservation operation. In the left side of FIG. 6, the delivery reservation screen 400 is illustrated as an example, where a login user name 'User A' is displayed at an upper part of the screen. The delivery reservation screen 400 includes a storage place selection field 401, a transfer destination selection field 402, a delivery place selection field 403, a date designation field 404, an item display area 411, and a destination display area 412. The storage place selection field 401 is a UI which allows the login user to select a storage place of the item 30 to be delivered from among places related to the entity to which the user belongs. The transfer destination selection field 402 is a UI which allows the login user to select an entity to which the item is to be transferred from among entities other than the entity to which the user belongs. The delivery place selection field 403 is a UI which allows the user to select a place to which the item 30 is to be delivered from among places related to the entity selected in the transfer destination selection field 402. The date designation field 404 is a UI which allows the user to designate a date when the delivery operation is to be performed (that is, expected delivery date). The item display area 411 displays, based on the item table 310, icon(s) representing item(s) which are currently stored in the place selected in the storage place selection field 401. In the example of FIG. 6, as a result of'Warehouse' being selected in the storage place selection field 401, two icons representing the items 30a and 30b currently stored in the warehouse are displayed in the item display area 411. The display position of each icon in the item display area 411 may be determined based on the coordinates of the corresponding item such that it virtually represents the current position of the item in the storage place. The destination display area 412 is a display area which virtually represents the destination of the delivery operation selected in the transfer destination selection field 402 and the delivery place selection field 403. In the example of FIG. 6, 'Work-site' of the entity E2 (that is, 'Company B') is selected as the destination of the delivery operation. For example, the user can designate the item 30a as a target item to be delivered to the 'Work-site' by dragging and dropping the icon of the item 30a displayed in the item display area 411 into the destination display area 412.

The transfer processing unit 233 receives such delivery reservation information via the delivery reservation screen 400. With reference to the right side of FIG. 5, the delivery reservation table 360 has five data elements including Record Number 361, Expected Delivery Date 362, Item ID 363, Destination 364, and Status 365. For example, the record #2 of the delivery reservation table 360 indicates that the item 30a identified by the item ID 'IT01' is expected to be delivered to the place identified by the place ID 'PL02' on the date 'YMD2' as the expected delivery date. At the time point when the delivery reservation is received, the delivery operation is not completed, and thus the transfer processing unit 233 sets the value of Status 365 of that record to 'Reserved'.

It should be noted that the delivery reservation screen 400 illustrated in FIG. 6 is a mere example of a UI for receiving a delivery reservation. The transfer processing unit 233 may receive a delivery reservation via another screen having any other configuration. The transfer processing unit 233 may receive a delivery reservation via a speech UI, or even receive a delivery reservation by receiving a reservation data file which describes reservation information.

### (2) Transfer of Item by Delivery

For ease of explanation, it is assumed here that a target item (for example, the item 30a) that belongs to a second entity (for example, Company A) related to a second position is transferred to a first entity (for example, Company B) related to a first position. It should be noted that, in the present Specification, the modifiers such as "first" and "second" are used only for the purpose of distinguishing multiple objects from each other, and that the modifiers do not mean any ordered relation at all. Before the delivery operation is performed, the item table 310 indicates that the target item belongs to the second entity. Starting with this status, the transfer processing unit 233 updates the item table 310 such that it indicates that the target item belongs to the first entity, provided that at least a first reading apparatus has read the tag ID of the position tag of the first position and the tag ID of the item tag of the target item. In the example where the item 30a is delivered to the place 10b, the position tag of the first position corresponds to the position tag 40b, and the item tag of the target item corresponds to the item tag 50a. The above condition means that the tag reading result indicates that the target item has been appropriately delivered to the place related to the first entity (for example, the place under the management of the first entity).

As a first practical example, the delivery to an appropriate place may be confirmed by the first reading apparatus (for example, the tag reader 100b) associated with the first entity and a second reading apparatus (for example, the tag reader 100a) associated with the second entity. As a second practical example, the delivery to an appropriate place may be confirmed only by the first reading apparatus (for example, the tag reader 100b) associated with the first entity which receives the target item.

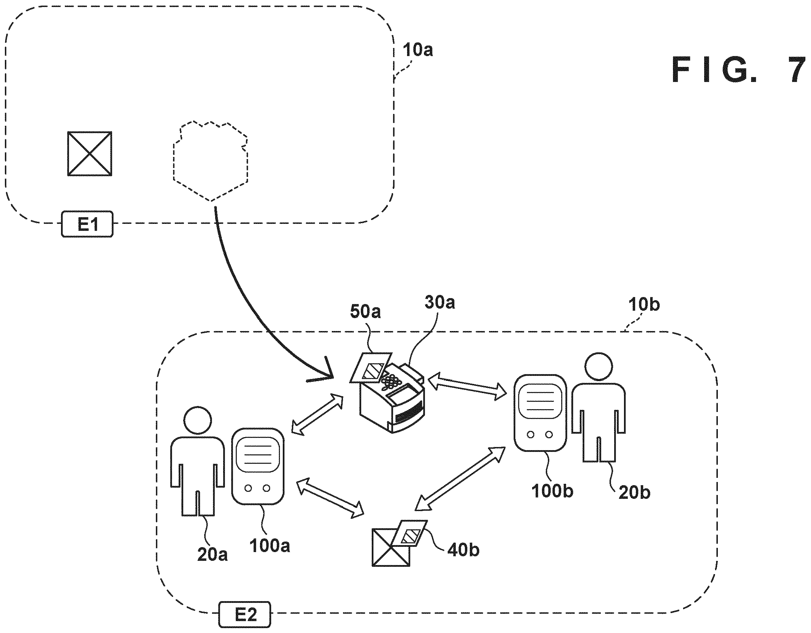

FIG. 7 is an explanatory diagram for explaining tag reading at the delivery operation in the first practical example. In the example of FIG. 7, the target item of the delivery is the item 30a that belongs to the entity E1 and has been stored in the place 10a. The user 20a who carries the tag reader 100a transports the item 30a to the place 10b on the expected delivery date. The user 20b who carries the tag reader 100b receives the item 30a at the place 10b. While the user 20a stays at the place 10b, the tag reader 100a reads the tag ID of the position tag 40b installed at the place 10b and the tag ID of the item tag 50a of the item 30a, and transmits the reading result data to the management server 200. Meanwhile, the tag reader 100b reads the tag ID of the position tag 40b and the tag ID of the item tag 50a, and transmits the reading result data to the management server 200, too. The tag processing unit 231 of the management server 200 stores these pieces of reading result data received via the communication unit 210 in the reading result table 350.

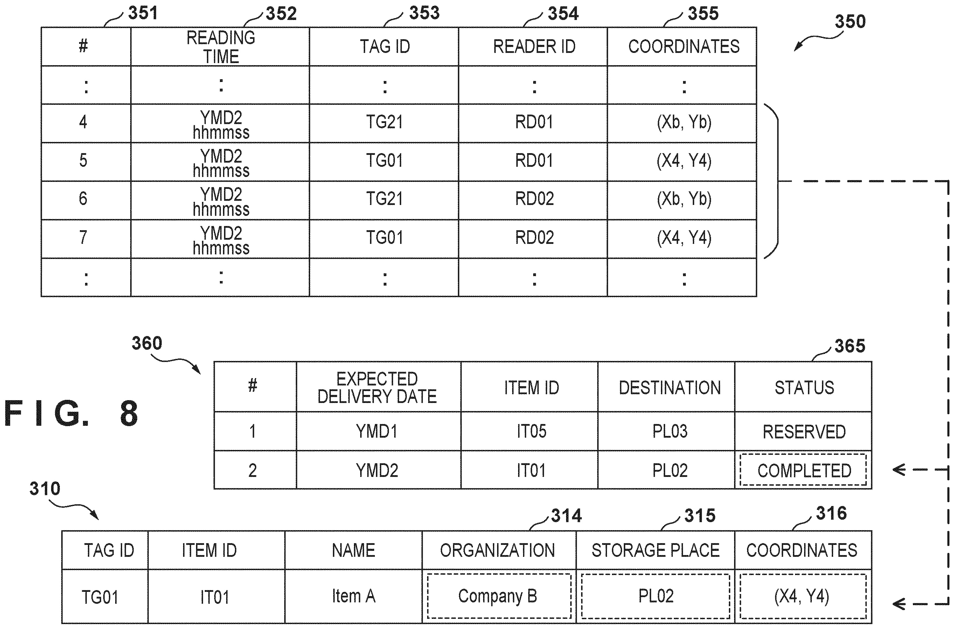

FIG. 8 is an explanatory diagram for explaining update of a delivery status based on the result of the tag reading described using FIG. 7. The reading result table 350 in FIG. 8 has two records #4 and #5 indicative of the result of the tag reading by the tag reader 100a and two records #6 and #7 indicative of the result of the tag reading by the tag reader 100b in the example of FIG. 7. For example, the transfer processing unit 233 refers to the delivery reservation table 360 and becomes aware that the item 30a identified by the item ID 'IT01' is expected to be delivered to the place 10b identified by the destination 'PL02' on the expected delivery date 'YMD2'. This delivery schedule says that the item 30a is to be transferred from the entity E1 (Company A), to which the item 30a currently belongs, to the entity E2 (Company B). The transfer processing unit 233 knows, from the records #4 and #5 of the reading result table 350, that the tag reader 100a associated with the entity E1 has read the tag ID 'TG21' of the position tag 40b of the place 10b and the tag ID 'TG01' of the item tag 50a. In addition, the transfer processing unit 233 knows, from the records #6 and #7 of the reading result table 350, that the tag reader 100b associated with the entity E2 has read the tag ID 'TG21' of the position tag 40b and the tag ID 'TG01' of the item tag 50a. The transfer processing unit 233 determines, based on the reading results, that the expected delivery operation has been performed, and updates the value of Status 365 of the record #2 of the corresponding reservation information of the delivery reservation table 360 into 'Complete'. Moreover, the transfer processing unit 233 updates the value of Organization 314 of the record of the item 30a of the item table 310 into 'Company B', which is the name of the entity E2. The position management unit 232 updates, as in the process in the inventory operation, the value of Storage Place 315 of the record of the item 30a of the item table 310 into the place ID 'PL02', and the values of Coordinates 316 into the latest positional coordinates (X4, Y4) of the item 30a.

According to this first practical example, an appropriate execution of the delivery operation is confirmed based on the results of tag reading by both of the tag reader under the management of the transfer source entity and the tag reader under the management of the transfer destination entity. Therefore, it is possible to appropriately change the entity to which the item belongs with surely preventing the parties concerned in the transfer from missing each other.

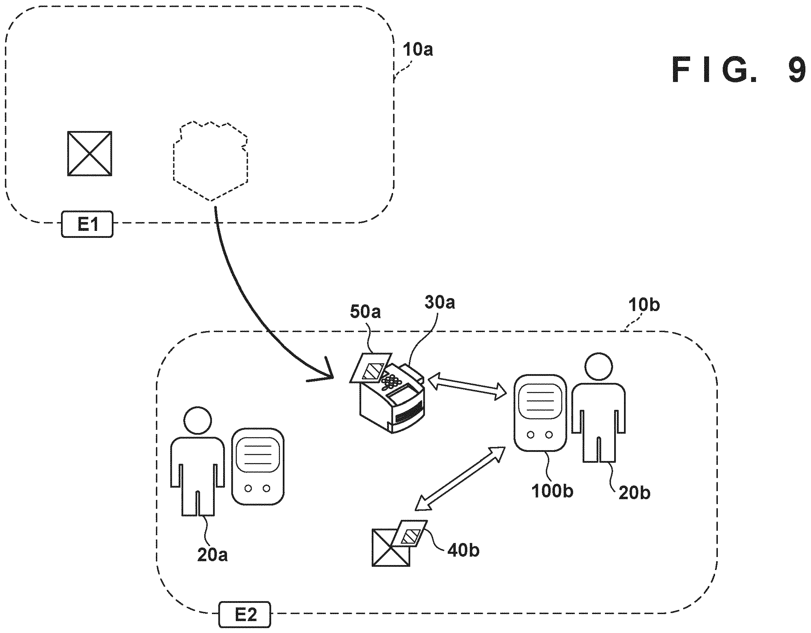

FIG. 9 is an explanatory diagram for explaining tag reading at the delivery operation in the second practical example. In the example of FIG. 9, the target item of the delivery is also the item 30a that belongs to the entity E1 and has been stored in the place 10a. The user 20a transports the item 30a to the place 10b on the expected delivery date. The user 20b who carries the tag reader 100b receives the item 30a at the place 10b. The tag reader 100b reads the tag ID of the position tag 40b installed at the place 10b and the tag ID of the item tag 50a of the item 30a received by the user 20b, and transmits the reading result data to the management server 200. The tag processing unit 231 of the management server 200 stores the reading result data received via the communication unit 210 in the reading result table 350.

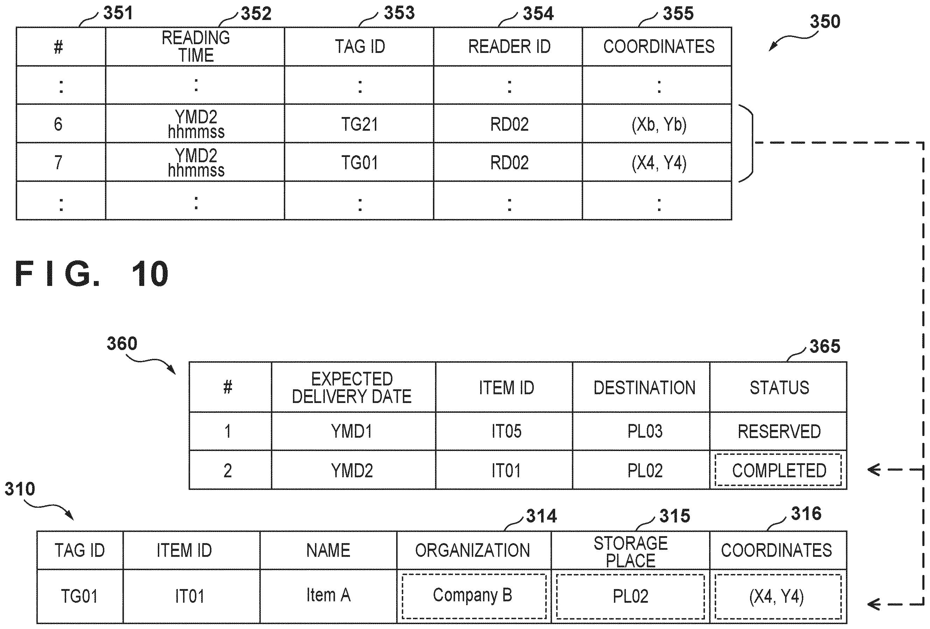

FIG. 10 is an explanatory diagram for explaining update of the delivery status based on the result of the tag reading described using FIG. 9. The reading result table 350 in FIG. 10 has two records #6 and #7 indicative of the result of the tag reading by the tag reader 100b in the example of FIG. 9. For example, the transfer processing unit 233 refers to the delivery reservation table 360 and becomes aware that the delivery operation similar to the example of FIG. 8 is expected. The transfer processing unit 233 knows, from the records #6 and #7 of the reading result table 350, that the tag reader 100b associated with the entity E2 has read the tag ID 'TG21' of the position tag 40b and the tag ID 'TG01' of the item tag 50a. The transfer processing unit 233 determines, based on the reading results, that the expected delivery operation has been performed, and updates the value of Status 365 of the record #2 of the corresponding reservation information of the delivery reservation table 360 into 'Complete'. Moreover, the transfer processing unit 233 updates the value of Organization 314 of the record of the item 30a of the item table 310 into 'Company B'. The position management unit 232 updates the value of Storage Place 315 of the record of the item 30a of the item table 310 into the place ID 'PL02', and the values of Coordinates 316 into the latest positional coordinates (X4, Y4) of the item 30a.

According to this second practical example, an execution of the delivery operation is confirmed based on the result of tag reading by the tag reader under the management of the transfer destination entity, and accordingly the entity to which the item belongs is changed in the item DB 220. Therefore, the person-in-charge on the transfer source entity side is not necessarily required to activate its own tag reader at the time of delivery, which allows for avoiding an inconvenient situation where the update of the item data fails due to the tag reader being not carried or malfunctioning (for example, battery exhaustion).

In both of the practical examples, the transfer processing unit 233 changes the entity to which the target item belongs based on the result of tag reading at least by the first reading apparatus and on the delivery reservation information indicating that the operation to move the target item to the destination will be carried out. This means that, when no valid delivery reservation information exists, the entity to which the target item belongs is not changed based only on the tag reading result. Therefore, if the tag ID of an item to be transported to a certain destination is unintentionally read by a tag reader in another place visited on the way or if the item is taken into an inappropriate place by a third party, it is possible to prevent a situation where the entity to which the item belongs is incorrectly changed. The transfer processing unit 233 may alert a user if the reading result data indicates that, in terms of a certain item, a tag reader has read the position tag of a place neither under the management of the entity to which the item currently belongs nor designated as the destination in the reservation information, as well as the item tag of this item. This allows the user to promptly notice that the item has been incorrectly transported or improperly taken out. It should be noted that such a cross-check with the reservation information is not always needed. For example, in an environment where no problems are caused by a tag reader unintentionally reading the tag ID, simple transfer management without the cross-check with the reservation information is also advantageous. The same applies to pickup reservation described later.

### (3) Reception of Pickup Reservation

The transfer processing unit 233 causes the display device of the user terminal 300 to display a pickup reservation screen which provides a UI for receiving a reservation of a pickup operation. The transfer processing unit 233 stores pickup reservation information received via the pickup reservation screen in the pickup reservation table 370 of the item DB 220.

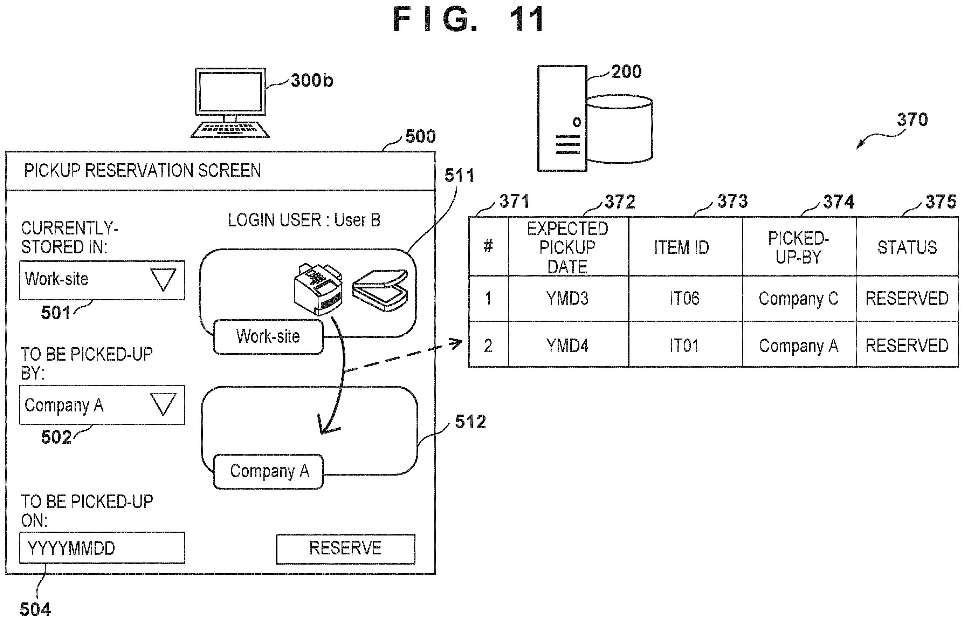

FIG. 11 is an explanatory diagram for explaining examples of configurations of the pickup reservation screen and the pickup reservation table. Herein, it is assumed that the user 20b utilizing the user terminal 300b logs in to the system and performs a pickup reservation operation. In the left side of FIG. 11, the pickup reservation screen 500 is illustrated as an example where a login user name 'User B' is displayed at an upper part of the screen. The pickup reservation screen 500 includes a storage place selection field 501, a pickup party selection field 502, a date designation field 504, an item display area 511, and a pickup party display area 512. The storage place selection field 501 is a UI which allows the login user to select a storage place of the item 30 to be picked up from among places related to the entity to which the user belongs. The pickup party selection field 502 is a UI which allows the login user to select an entity as a pickup party (that is, transfer destination) of the item from among entities other than the entity to which the user belongs. The date designation field 504 is a UI which allows the user to designate a date when the pickup operation is to be performed (that is, expected pickup date). The item display area 511 displays, based on the item table 310, icon(s) representing item(s) which are currently stored in the place selected in the storage place selection field 501. In the example of FIG. 11, as a result of 'Work-site' being selected in the storage place selection field 501, two icons representing the items currently stored in the work-site are displayed in the item display area 511. The display position of each icon in the item display area 511 may be determined based on the coordinates of the corresponding item such that it virtually represents the current position of the item in the storage place. The pickup party display area 512 is a display area which virtually represents the pickup party selected in the pickup party selection field 502. In the example of FIG. 11, the entity E1 (that is, 'Company A') is selected as the pickup party. For example, the user can designate the item 30a as a target item to be picked up by a person-in-charge of the entity E1 by dragging and dropping the icon of the item 30a displayed in the item display area 511 into the pickup party display area 512.

The transfer processing unit 233 receives such pickup reservation information via the pickup reservation screen 500. With reference to the right side of FIG. 11, the pickup reservation table 370 has five data elements including Record Number 371, Expected Pickup Date 372, Item ID 373, Pickup Party 374, and Status 375. For example, the record #2 of the pickup reservation table 370 indicates that the item 30a identified by the item ID 'IT01' is expected to be picked up by the pickup party 'Company A' on the date 'YMD4' as the expected pickup date. At the time point when the pickup reservation is received, the pickup operation is not completed, and thus the transfer processing unit 233 sets the value of Status 375 of that record to 'Reserved'.

It should be noted that the pickup reservation screen 500 illustrated in FIG. 11 is a mere example of a UI for receiving a pickup reservation. The transfer processing unit 233 may receive a pickup reservation via another screen having any other configuration. The transfer processing unit 233 may receive a pickup reservation via a speech UI, or even receive a pickup reservation by receiving a reservation data file which describes reservation information.

### (4) Transfer of Item by Pickup

For ease of explanation, it is assumed here that a target item (for example, the item 30a) that belongs to a first entity (for example, Company B) related to a first position is transferred through the pickup operation to a second entity (for example, Company A) related to a second position. Before the pickup operation is performed, the item table 310 indicates that the target item belongs to the first entity. Starting with this status, the transfer processing unit 233 updates the item table 310 such that it indicates that the target item belongs to the second entity, when a second reading apparatus associated with the second entity reads the tag ID of the position tag of the first position and the tag ID of the item tag of the target item. In the present embodiment, the state where the second reading apparatus is associated with the second entity means that there exists data which associates the second reading apparatus with the second entity. For example, as explained using FIG. 4C, the reader table 330 of the item DB 220 has a record that associates the tag reader 100a identified by Reader ID 'RD01' with the manager 'Company A'. Therefore, the tag reader 100a is associated with the entity E1 having the name of 'Company A'. In the example where the user 20a who is a person-in-charge of Company A picks up the item 30a stored in the place 10b, the second reading apparatus corresponds to the tag reader 100a, the position tag of the first position corresponds to the position tag 40b, and the item tag of the target item corresponds to the item tag 50a. The above condition means that the tag reading result indicates that a person-in-charge of the legitimate pickup party has visited the appropriate place to pick up the target item.

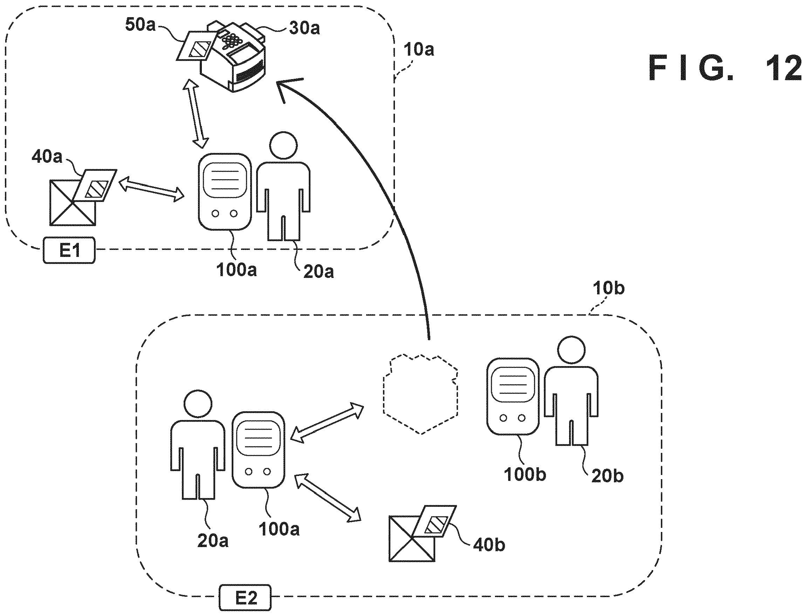

FIG. 12 is an explanatory diagram for explaining tag reading at the pickup operation in the present embodiment. In the example of FIG. 12, the target item of the pickup is the item 30a that belongs to the entity E2 and is stored in the place 10b. The user 20a who carries the tag reader 100a visits the place 10b and picks up the item 30a on the expected pickup date. While the user 20a stays at the place 10b, the tag reader 100a reads the tag ID of the position tag 40b installed at the place 10b and the tag ID of the item tag 50a of the item 30a, and transmits the reading result data to the management server 200. The tag processing unit 231 of the management server 200 stores this reading result data received via the communication unit 210 in the reading result table 350.

After picking up the item 30a at the place 10b, the user 20a takes the item 30a back to the place 10a under the management of the entity E1, for example. The tag reader 100a reads the tag ID of the position tag 40a installed at the place 10a and the tag ID of the item tag 50a of the item 30a, and transmits the reading result data to the management server 200. The tag processing unit 231 of the management server 200 stores this reading result data received via the communication unit 210 in the reading result table 350.

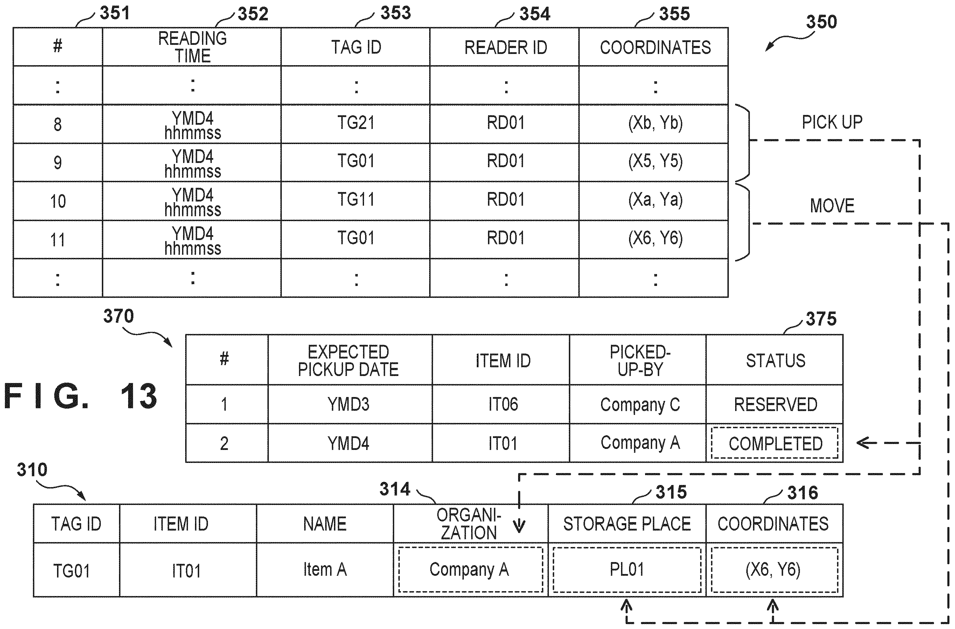

FIG. 13 is an explanatory diagram for explaining update of a pickup status based on the result of the tag reading described using FIG. 12. The reading result table 350 in FIG. 13 has two records #8 and #9 indicative of the result of the tag reading by the tag reader 100a at the place 10b in the example of FIG. 12. For example, the transfer processing unit 233 refers to the pickup reservation table 370 and becomes aware that the item 30a identified by the item ID 'IT01' is expected to be picked up by a person-in-charge of the entity E1, which is Company A, on the expected pickup date `YMD4'. This pickup schedule says that the item 30a is to be transferred from the entity E2 (Company B), to which the item 30a currently belongs, to the entity E1 (Company A). The transfer processing unit 233 knows, from the records #8 and #9 of the reading result table 350, that the tag reader 100a associated with the entity E1 has read the tag ID 'TG21' of the position tag 40b of the place 10b and the tag ID 'TG01' of the item tag 50a. The transfer processing unit 233 determines, based on this reading result, that the expected pickup operation has been performed, and updates the value of Status 375 of the record #2 of the corresponding reservation information of the pickup reservation table 370 into 'Complete'. Moreover, the transfer processing unit 233 updates the value of Organization 314 of the record of the item 30a of the item table 310 into 'Company A', which is the name of the entity E1.

The reading result table 350 in FIG. 13 also has two records #10 and #11 indicative of the result of the tag reading by the tag reader 100a after the user 20a takes the item 30a back to the place 10a in the example of FIG. 12. The position management unit 232 updates, based on the records #10 and #11 of the reading result table 350, the value of Storage Place 315 of the record of the item 30a of the item table 310 into the place ID 'PL01', and the values of Coordinates 316 into the latest positional coordinates (X6, Y6) of the item 30a.

According to such an embodiment, the entity to which the item belongs can be changed after an appropriate execution of the pickup operation is confirmed based on the result of tag reading by the tag reader under the management of the transfer destination entity.

The transfer processing unit 233 changes the entity to which the target item belongs based on the result of tag reading by the second reading apparatus under the management of the pickup party and on the pickup reservation information indicating that a person-in-charge of the pickup party will perform the operation to pick up the target item from the current storage place. This means that, when no valid pickup reservation information exists, the entity to which the target item belongs is not changed based only on the tag reading result. Therefore, if an item is incorrectly handed over to a third party who has the tag reader 100 but is not the legitimate pickup party, it is possible to prevent a situation where the entity to which the item belongs is changed accordingly. In this case, the transfer processing unit 233 may also alert a user associated with the entity to which the target item currently belongs as in the case of incorrect delivery.

### (5) Correspondence Determination based on Temporal Correlation

In the present embodiment, the transfer processing unit 233 may determine the correspondence between the tag IDs read from two or more tags based on the temporal correlation between reading results received from the same tag reader 100 as in the position management unit 232. For example, the transfer processing unit 233 knows, from the records #6 and #7 of the reading result table 350 illustrated in FIG. 10, that the tag reader 100b has read the tag ID 'TG21' of the position tag 40b and the tag ID 'TG01' of the item tag 50a within a predetermined interval. This allows the transfer processing unit 233 to determine that the tag reader 100b under the management of the transfer destination entity E2 has confirmed the appropriate delivery of the item 30a to the place 10b where the position tag 40b is installed. In this way, the correspondence between records is determined based on the temporal correlation on the management server 200 side, and thus the tag reader 100 only needs to simply transmit the result of tag reading from the multiple tags along with respective time stamps to the management server 200. With such a configuration, it is possible to keep the implementation of the tag readers 100 simple, make low-cost deployment of many tag readers 100 to the system easier, and expand the usage of the item management system 1. The temporal correlation between reading result records may be determined by any determination condition, for example, that the difference between their respective reading times is smaller than a threshold value, the reading times belong to the same time period, or reading has been performed more than a predetermined number of times within a predetermined interval.

### <1-3-5. Provision of Item-related Information>

The information provision unit 234 provides the user terminal 300 of a user associated with each entity with information related to items belonging to that entity based on data maintained by the item DB 220. For example, the item-related information provided to the user terminal 300 includes at least one of the item ID, the name, the storage place, the position information, and the status of operation such as delivery or pickup for each item. When a user who is a member of a certain entity has logged in to the system, the login user can be provided with only information related to items belonging to the entity. Alternatively, the login user may also be provided with information related to an item which is expected to belong to the entity or an item which has previously belonged to the entity in such a manner that these statuses are distinguishable. Access to the information may be controlled on a device basis rather than (or in addition to) a user basis. That is, the information provision unit 234 may provide an accessing user terminal 300 with only information related to items belonging to the entity associated with the accessing user terminal 300.

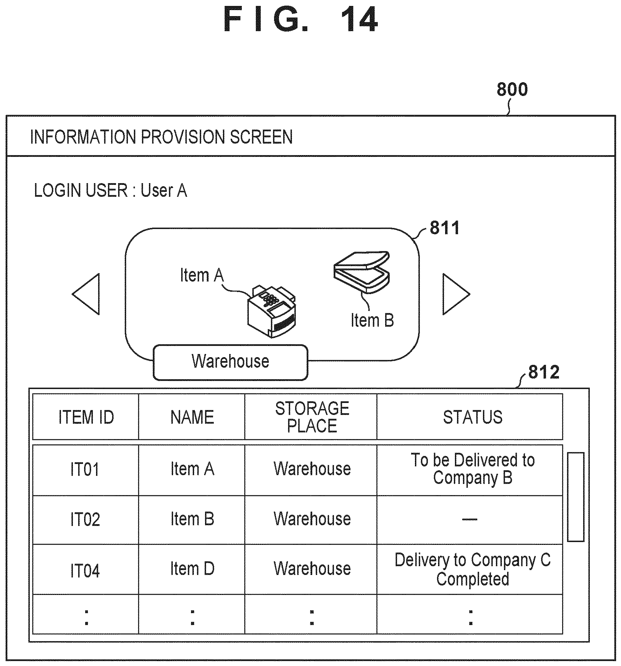

FIG. 14 illustrates an example of an information provision screen 800 that can be displayed on the display of the user terminal to provide the item-related information to the user. Herein, it is assumed that the user 20a utilizing the user terminal 300a logs in to the system and makes inquiries about the item-related information. The login user name 'User A' is displayed at an upper part of the screen. The information provision screen 800 includes a map display area 811 and an item list display area 812. The map display area 811 is an area which visually displays, in the form of a map, the position information of one or more items stored in the place selected by the user. In the example of FIG. 14, icons of 'Item A' and 'Item B' stored in 'Warehouse' are displayed in the map display area 811 at positions based on the coordinates value of Coordinates 316 of the item table 310. The item list display area 812 is an area which displays, in the form of a table, the item-related information of the one or more items that the user is allowed to access. In the example of FIG. 14, the item list display area 812 displays the respective item IDs, names, storage places, and statuses of 'Item A', 'Item B', and 'Item D' belonging to the entity E1. Meanwhile, the item-related information of 'Item C' belonging to the entity E2, for example, is not displayed on the screen. In this way, the item management system 1 that efficiently manages the item transfer on the database can provide the item-related information under access control for each entity, which can balance the user convenience of the item management and the safety of information security.

It should be noted that the information provision screen 800 illustrated in FIG. 14 is a mere example of a screen that displays the item-related information. The information provision unit 234 may provide the item-related information via another screen having any other configuration. The information provision unit 234 may output the item-related information via a speech UI, or even provide a user with the item-related information by transmitting a data file which describes the item-related information to the user terminal 300.

### <1-4. Process Flow>

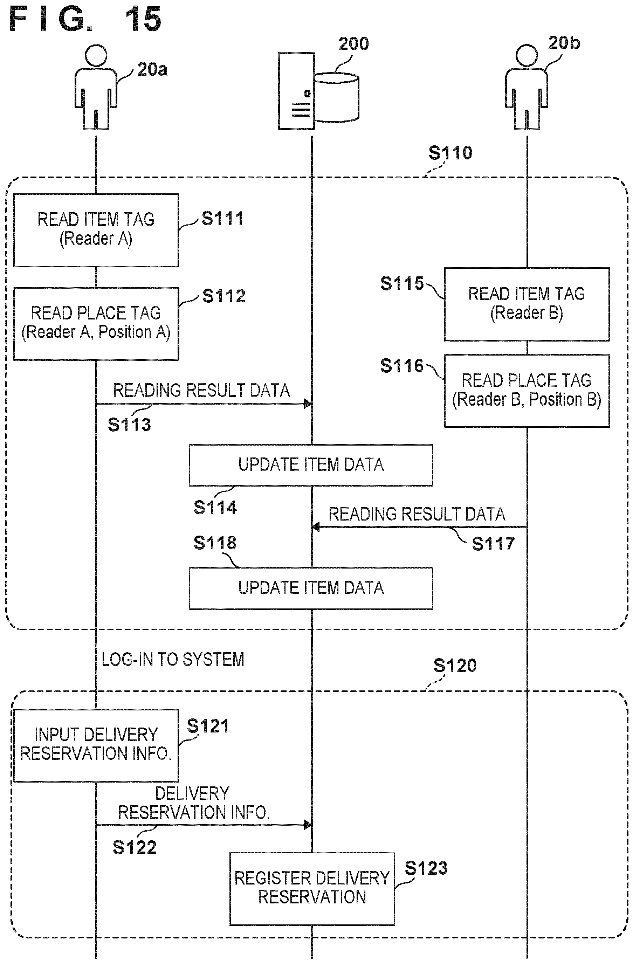

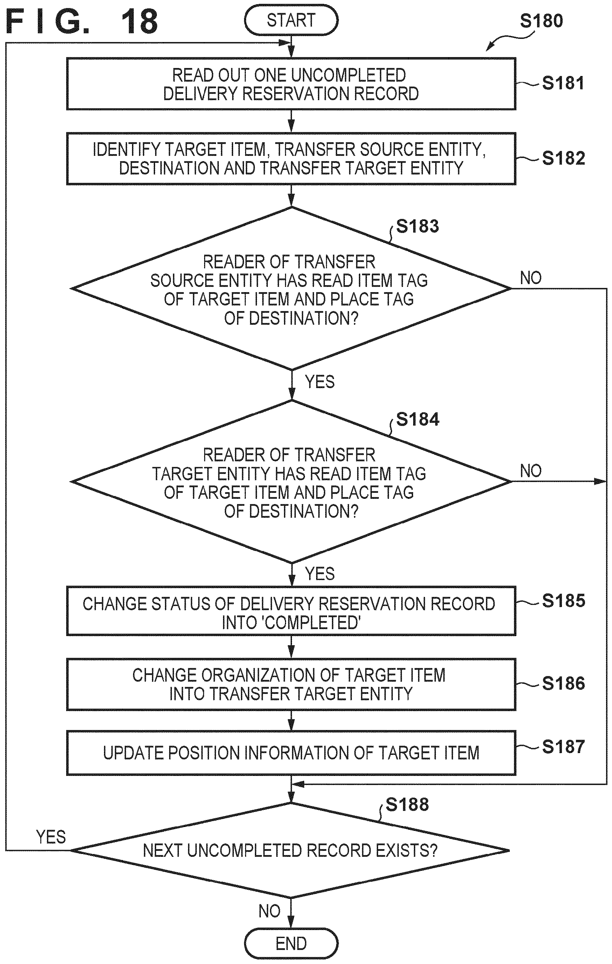

In this section, examples of process flows in the item management system 1 according to the present embodiment will be described using sequence diagrams in FIGs. 15 to 17 and flow charts in FIGs. 18 to 20. It should be noted that a process step is abbreviated as S (step) in the following descriptions.

### <1-4-1. Inventory>

The upper part of FIG. 15 illustrates a flow of a process relevant to the inventory operation S 110 performed by the user 20a of Company A and the user 20b of Company B at the places 10a and 10b, respectively.

First, in S111, when the user 20a who carries the tag reader 100a visits the place 10a, the tag reader 100a reads the tag ID from the item tag 50 of at least one item 30 stored in the place 10a. Next, in S112, the tag reader 100a reads the tag ID from the position tag 40a installed at the place 10a. When a timing of communication with the management server 200 arrives, in S113, the tag reader 100a transmits the reading result data indicative of the result of the tag reading that has been performed by then to the management server 200.

The tag processing unit 231 of the management server 200 adds the reading result data received from the tag reader 100a in S113 to the reading result table 350, and invokes the position management unit 232. In S114, the position management unit 232 updates the positional coordinates (the values of Coordinates 316 of the item table 310) of the at least one item 30 stored in the place 10a based on the reading result data added to the reading result table 350. If the detected item 30 has been newly moved from another place (for example, place 10c) to the place 10a, the position management unit 232 also updates the storage place (the value of Storage Place 315 of the item table 310) of that item 30.

Meanwhile, in S115, when the user 20b who carries the tag reader 100b visits the place 10b, the tag reader 100b reads the tag ID from the item tag 50 of at least one item 30 stored in the place 10b. Next, in S116, the tag reader 100b reads the tag ID from the position tag 40b installed at the place 10b. When a timing of communication with the management server 200 arrives, in S117, the tag reader 100b transmits the reading result data indicative of the result of the tag reading that has been performed by then to the management server 200.

In S118, the tag processing unit 231 and the position management unit 232 of the management server 200 update, as in S114, the positional coordinates (and the storage place as necessary) of the detected item 30 based on the reading result data received from the tag reader 100b.

### <1-4-2. Delivery Reservation>

The lower part of FIG. 15 illustrates a flow of a process relevant to the delivery reservation operation S120 performed by the user 20a of Company A using the user terminal 300a.

First, in S121, the user 20a who has logged in to the item management system 1 on the user terminal 300a opens the delivery reservation screen 400 and inputs delivery reservation information such as a delivery target item, a transfer destination entity, a destination place, and an expected delivery date. In S122, the user terminal 300a transmits the input delivery reservation information to the management server 200.

In S123, the transfer processing unit 233 of the management server 200 registers the received delivery reservation by adding the delivery reservation information received from the user terminal 300a in S122 to the delivery reservation table 360. The transfer processing unit 233 sets the status of the newly registered delivery reservation (the value of Status 365 of the delivery reservation table 360) to 'Reserved'.

### <1-4-3. Delivery>

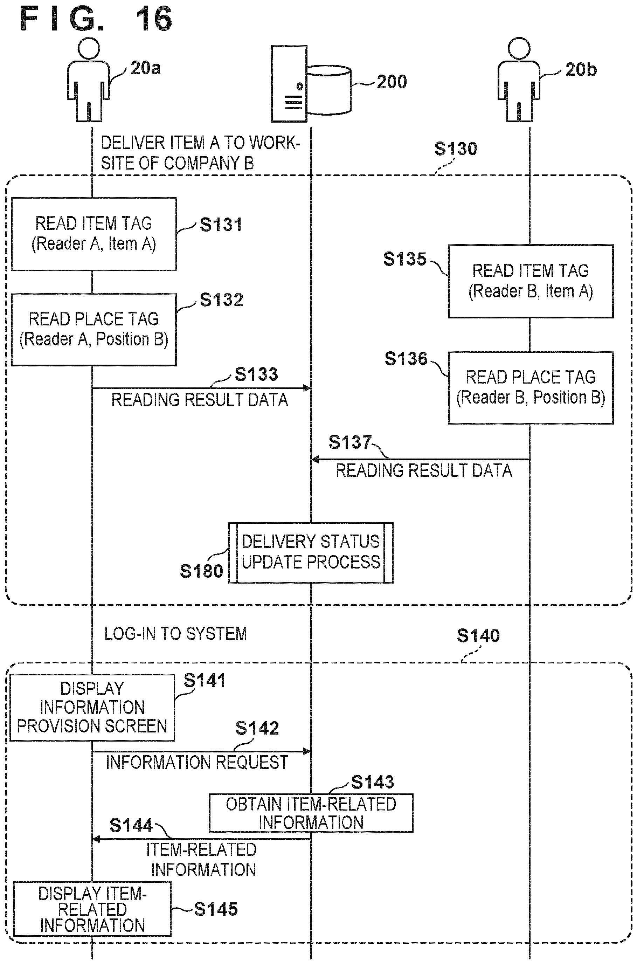

The upper part of FIG. 16 illustrates a flow of a process relevant to the delivery operation S130 in which the user 20a of Company A transports an item 30a (Item A) as the delivery target item to the place 10b (work-site of Company B) to transfer the item 30a to Company B.

First, in S131, when the user 20a who carries the tag reader 100a arrives at the place 10b, the tag reader 100a reads the tag ID from the item tag 50a of the item 30a that has been moved to the place 10b. Next, in S132, the tag reader 100a reads the tag ID from the position tag 40b installed at the place 10b. When a timing of communication with the management server 200 arrives, in S133, the tag reader 100a transmits the reading result data indicative of the result of the tag reading that has been performed by then to the management server 200. The tag processing unit 231 of the management server 200 adds the reading result data received from the tag reader 100a in S133 to the reading result table 350.

In S135, the tag reader 100b carried by the user 20b in the place 10b reads the tag ID from the item tag 50a of the item 30a. Next, in S136, the tag reader 100b reads the tag ID from the position tag 40b installed at the place 10b. When a timing of communication with the management server 200 arrives, in S137, the tag reader 100b transmits the reading result data indicative of the result of the tag reading that has been performed by then to the management server 200. The tag processing unit 231 of the management server 200 adds the reading result data received from the tag reader 100b in S137 to the reading result table 350.

The transfer processing unit 233 of the management server 200, for example, periodically reads the delivery reservation information from the delivery reservation table 360 and checks whether it has a delivery reservation whose status is to be updated. When a timing of check arrives, in S180, the transfer processing unit 233 executes a delivery status update process and updates the entity to which the item 30a belongs (the value of Organization 314 of the item table 310) based on the reading result data received in S133 and S137. Here, the entity to which the item 30a belongs is updated from the entity E1 (Company A) to the entity E2 (Company B). An example of a detailed flow of the delivery status update process in S180 will be further described later.

### <1-4-4. Information Inquiry>

The lower part of FIG. 16 illustrates a flow of a process relevant to an information inquiry operation S140 performed by the user 20a of Company A using the user terminal 300a.

First, in S141, the user 20a who has logged in to the item management system 1 on the user terminal 300a invokes the information provision screen 800. In S142, the user terminal 300a requests the management server 200 to provide the item-related information that is allowed to be accessed by the user 20a. In S143, since the user 20a is associated with the entity E1 in the user table 340, the information provision unit 234 of the management server 200 obtains the item-related information of one or more items 30 belonging to the entity E1 from the item DB 220. Then, in S144, the information provision unit 234 transmits the obtained item-related information to the user terminal 300a. In S145, the user terminal 300a causes the information provision screen 800 to display the item-related information received from the management server 200.

### <1-4-5. Pickup Reservation>

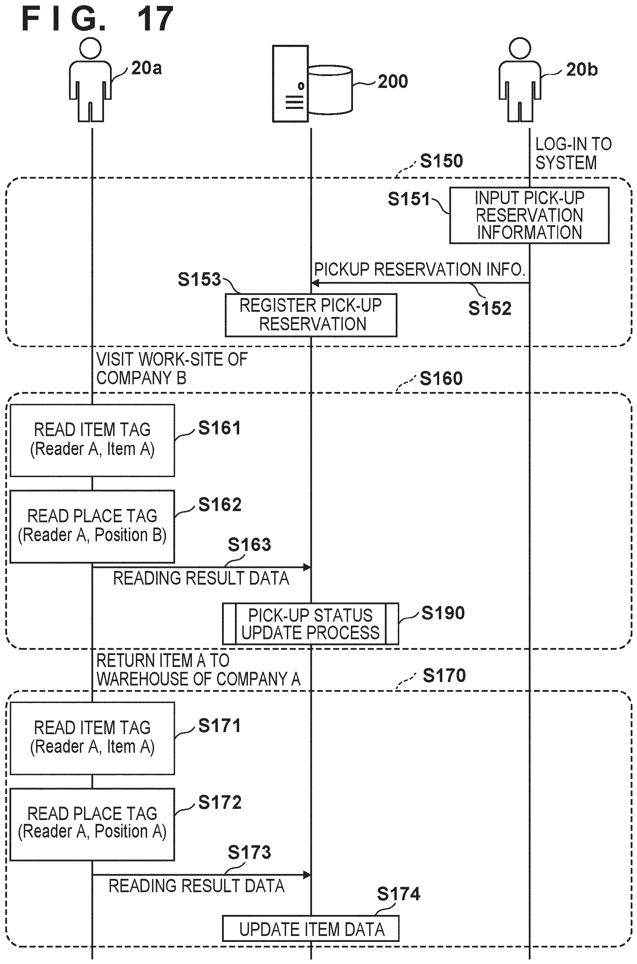

The upper part of FIG. 17 illustrates a flow of a process relevant to the pickup reservation operation S150 performed by the user 20b of Company B using the user terminal 300b.

First, in S151, the user 20b who has logged in to the item management system 1 on the user terminal 300b invokes the pickup reservation screen 500 and inputs pickup reservation information such as a pickup target item, a transfer destination entity (pickup party), and an expected pickup date. In S152, the user terminal 300b transmits the input pickup reservation information to the management server 200.

In S153, the transfer processing unit 233 of the management server 200 resisters the received pickup reservation by adding the pickup reservation information received from the user terminal 300b in S152 to the pickup reservation table 370. The transfer processing unit 233 sets the status of the newly registered pickup reservation (the value of Status 375 of the pickup reservation table 370) to 'Reserved'.

### <1-4-6. Pickup >

The middle part of FIG. 17 illustrates a flow of a process relevant to the pickup operation S160 in which the user 20a of Company A visits the place 10b (work-site of Company B) to pick up an item 30a (Item A) as the target item and thereby transfers the item 30a from Company B to Company A.

First, in S161, when the user 20a who carries the tag reader 100a arrives at the place 10b, the tag reader 100a reads the tag ID from the item tag 50a of the item 30a stored in the place 10b. Next, in S162, the tag reader 100a reads the tag ID from the position tag 40b installed at the place 10b. When a timing of communication with the management server 200 arrives, in S163, the tag reader 100a transmits the reading result data indicative of the result of the tag reading that has been performed by then to the management server 200. The tag processing unit 231 of the management server 200 adds the reading result data received from the tag reader 100a in S163 to the reading result table 350.

The transfer processing unit 233, for example, periodically reads the pickup reservation information from the pickup reservation table 370 and checks whether it has a pickup reservation whose status is to be updated. When a timing of check arrives, in S190, the transfer processing unit 233 executes a pickup status update process and updates the entity to which the item 30a belongs (the value of Organization 314 of the item table 310) based on the reading result data received in S163. Here, the entity to which the item 30a belongs is updated from the entity E2 (Company B) to the entity E1 (Company A). An example of a detailed flow of the pickup status update process in S190 will be further described later.

The lower part of FIG. 17 illustrates a flow of a process relevant to a stock management operation S170 performed when the user 20a of Company A takes the picked-up item 30a (Item A) back to the warehouse.

First, in S171, the tag reader 100a carried by the user 20a reads the tag ID from the item tag 50a of the item 30a that has been returned to the place 10a. Next, in S172, the tag reader 100a reads the tag ID from the position tag 40a installed at the place 10a. When a timing of communication with the management server 200 arrives, in S173, the tag reader 100a transmits the reading result data indicative of the result of the tag reading that has been performed by then to the management server 200.

The tag processing unit 231 of the management server 200 adds the reading result data received from the tag reader 100a in S173 to the reading result table 350, and invokes the position management unit 232. In S174, the position management unit 232 updates the storage place and the positional coordinates (the values of Storage Place 315 and Coordinates 316 of the item table 310) of the item 30a based on the reading result data added to the reading result table 350.

### <1-4-7. Delivery Status Update Process (First Practical Example)>

FIG. 18 is a flow chart illustrating an example of a flow of the delivery status update process according to the first practical example of the first embodiment. As described above, in the first practical example, an appropriate execution of the delivery operation is confirmed based on the results of tag reading by both of the tag readers under the management of the transfer source entity and under the management of the transfer destination entity.

First, in S181, the transfer processing unit 233 reads an uncompleted delivery reservation record from the delivery reservation table 360. It should be noted that only a record indicating a date before a current day as the expected delivery date may be subject to the reading by the transfer processing unit 233. Next, in S182, the transfer processing unit 233 identifies the delivery target item, the transfer source entity, the destination, and the transfer destination entity from the read record and the master data of the item DB 220.

Then, in S183, the transfer processing unit 233 refers to the reading result table 350 to determine whether the tag reader 100 of the transfer source entity has read the tag ID of the item tag of the target item and the tag ID of the position tag installed at the destination place. In addition, in S184, the transfer processing unit 233 refers to the reading result table 350 to determine whether the tag reader 100 of the transfer destination entity has read the tag ID of the item tag of the target item and the tag ID of the position tag installed at the destination place.

When at least one of the determination conditions in S183 and S184 is not satisfied (a determination result is No), subsequent process steps of S185 to S187 are skipped. When both the determination conditions are satisfied (the determination results are Yes), in S185, the transfer processing unit 233 changes the status of the delivery reservation record read in S181 to 'Complete'. Then, in S186, the transfer processing unit 233 changes the value of Organization 314 of the target item record of the item table 310 to a value indicating the transfer destination entity.

Then, in S187, the position management unit 232 updates the values of Storage Place 315 and Coordinates 316 of the target item record of the item table 310 into the respective latest values.

Then, in S188, the transfer processing unit 233 determines whether the delivery reservation table 360 still has another uncompleted delivery reservation record to be processed next. If there remains a next delivery reservation record, the process returns to S181, and the next delivery reservation record is also processed in S181 to S187 as described above. When the next delivery reservation record does not remain, the delivery status update process of FIG. 18 ends, and the transfer processing unit 233 stands by until a next processing timing.

### <1-4-8. Delivery Status Update Process (Second Practical Example)>

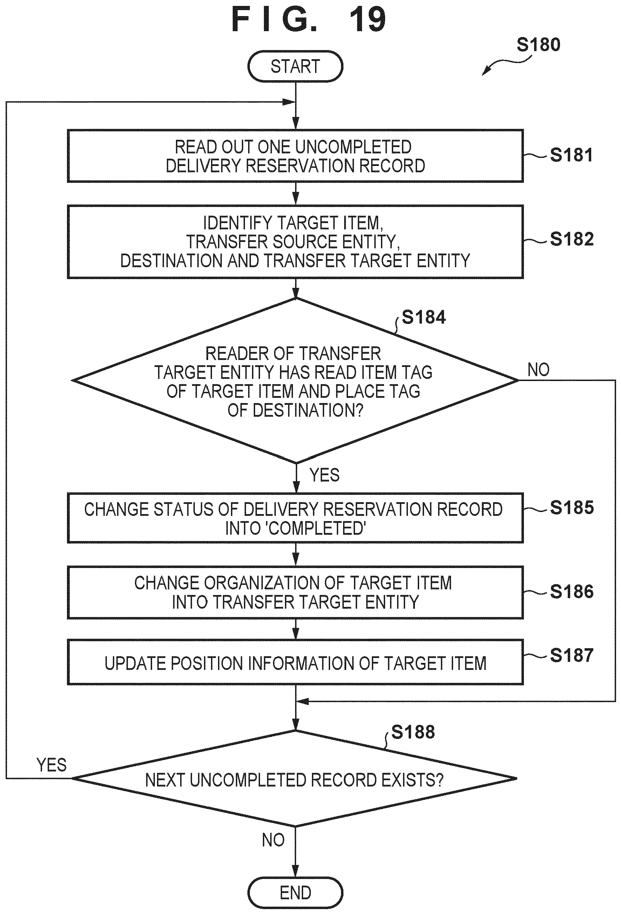

FIG. 19 is a flow chart illustrating an example of a flow of the delivery status update process according to the second practical example of the first embodiment. As described above, in the second practical example, an appropriate execution of the delivery operation is confirmed based on the result of tag reading by the tag reader under the management of the transfer destination entity.

A difference from the flow chart of FIG. 18 is that the flow chart of FIG. 19 does not include the condition determination in S183. The transfer processing unit 233 reads a delivery reservation record from the delivery reservation table 360, and identifies the target item and other necessary information. Then, in S184, the transfer processing unit 233 obtains the result of tag reading by the tag reader 100 of the transfer destination entity from the reading result table 350. When determining that the tag reader 100 of the transfer destination entity has read the tag ID of the item tag of the target item and the tag ID of the position tag installed at the destination place, in S185, the transfer processing unit 233 changes the status of the delivery reservation record to 'Complete'. Details of process steps in FIG. 19 denoted with the same reference signs as those in FIG. 18 may be the same as described in connection with FIG. 18, and are thus not described herein.

### <1-4-9. Pickup Status Update Process>

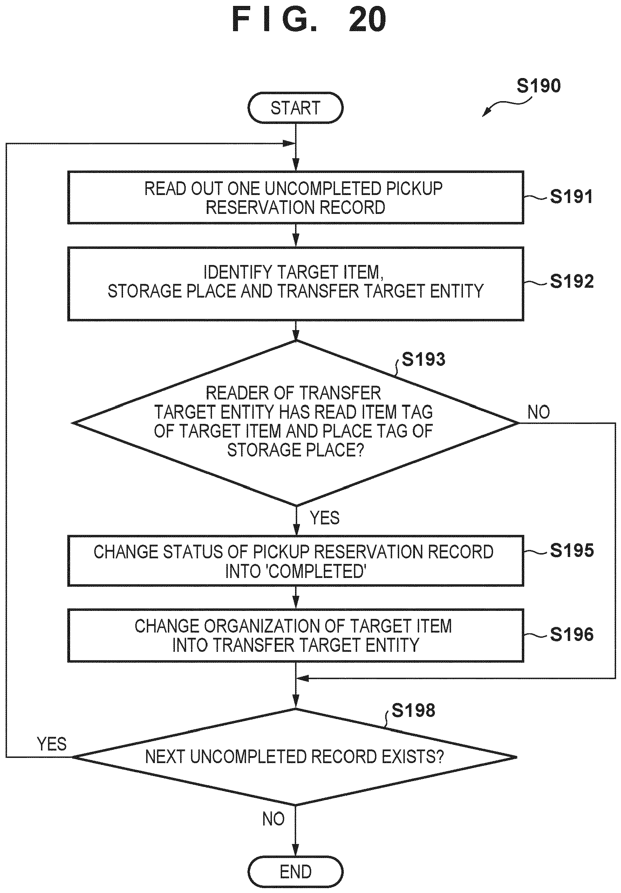

FIG. 20 is a flow chart illustrating an example of a flow of the pickup status update process according to the first embodiment. As described above, in the present embodiment, at the time of pickup, an appropriate execution of the pickup operation is confirmed based on the result of tag reading by the tag reader under the management of the transfer destination entity.

First, in S191, the transfer processing unit 233 reads an uncompleted pickup reservation record from the pickup reservation table 370. It should be noted that only a record indicating a date before a current day as the expected pickup date may be subject to the reading by the transfer processing unit 233. Next, in S192, the transfer processing unit 233 identifies the pickup target item, the current storage place of the target item (pickup place), and the transfer destination entity (pickup party) from the read record and the master data of the item DB 220.

Next, in S193, the transfer processing unit 233 refers to the reading result table 350 to determine whether the tag reader 100 of the transfer destination entity has read the tag ID of the item tag of the target item and the tag ID of the position tag installed at the current storage place.

When the determination condition in S193 is not satisfied (the determination result is No), subsequent process steps of S195 to S196 are skipped. When the determination condition is satisfied (the determination result is Yes), in S195, the transfer processing unit 233 changes the status of the pickup reservation record read in S191 to 'Complete'. Then, in S196, the transfer processing unit 233 changes the value of Organization 314 of the target item record of the item table 310 to a value indicating the transfer destination entity.

Then, in S198, the transfer processing unit 233 determines whether the pickup reservation table 370 still has another uncompleted pickup reservation record to be processed next. If there remains a next pickup reservation record, the process returns to S191, and the next pickup reservation record is also processed in S191 to S196 as described above. When the next pickup reservation record does not remain, the pickup status update process of FIG. 20 ends, and the transfer processing unit 233 stands by until a next processing timing.

### <1-5. Summary>

According to the first embodiment, the item management system that manages a change (that is, transfer) of an entity to which an item belongs incorporates a first wireless device installed at a first position, a second wireless device that moves together with the item, and a reading apparatus that reads identification information from the wireless devices. The first position is located in a place related to a first entity, and a second position is located in a place related to a second entity. In a case where the item which belongs to the second entity is delivered to the first position, when the reading apparatus associated with the first entity has read:
▪ identification information of the first wireless device (for example, the tag ID of the position tag); and
▪ identification information of the second wireless device (for example, the tag ID of the item tag),
the management unit of the item management system updates the entity to which the item belongs in the item data from the second entity to the first entity.

In a case where the item which belongs to the first entity is picked up at the first position and thereby transferred to the second entity, when the reading apparatus associated with the second entity has read:
▪ identification information of the first wireless device (for example, the tag ID of the position tag); and
▪ identification information of the second wireless device (for example, the tag ID of the item tag),
the management unit of the item management system updates the entity to which the item belongs in the item data from the first entity to the second entity. Here, the reading apparatus associated with the second entity is a reading apparatus that is associated with the second entity by data in the database.

With this configuration, users involved in the operation to transfer an item only need to carry the respective reading apparatuses so that the entity to which the item belongs in the item data can be updated appropriately and efficiently based on the results of the information reading from the wireless devices.

### <2. Second Embodiment>

In the first embodiment described above, the separate tag reader 100 is prepared for at least each entity and the reader ID is assigned to the tag reading result, which allows for determining to which entity the user involved in the operation belongs based on the tag reading result. In the second embodiment described in this section, it is assumed that the determination of to which entity a user involved in an operation belongs is made based on a result of tag reading from a user tag carried by the user instead of the reader ID for identifying the tag reader 100. This makes it easy to share the tag reader 100 between users and between entities.

### <2-1. System Overview>

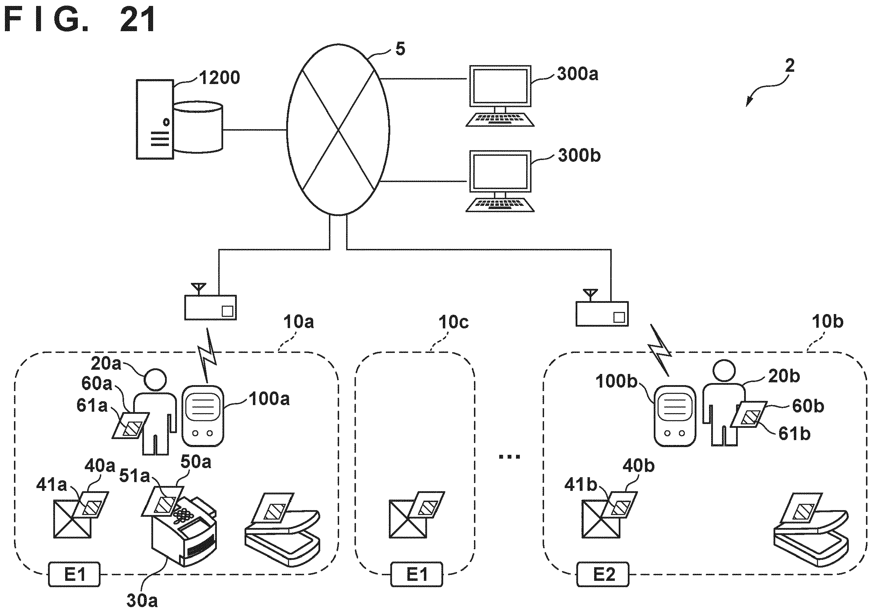

FIG. 21 is a schematic view illustrating an example of a configuration of an item management system 2 according to the second embodiment. A difference from the item management system 1 is that, in the item management system 2, each user 20 carries a user tag 60 with embedded specific identification information (tag ID) 61, and the tag reader 100 also reads the tag ID 61 from the user tag 60. For example, a user 20a carries a user tag 60a which stores a tag ID 61a. A user 20b carries a user tag 60b which stores a tag ID 61b. In addition, the item management system 2 includes a management server 1200 instead of the management server 200 according to the first embodiment.

The user tags 60 are wireless devices which are carried by the users 20 in the item management system 2. When the user 20 is a member of an entity as a company, the user tag 60 may be embedded in an employee ID card.

In the present embodiment, the user tags 60 are assumed to be passive-type RFID tags like the position tags 40 and the item tags 50. It should be noted that, in another embodiment, the user tags 60 may be wireless devices (IC cards) conforming to the Near Field Communication (NFC) protocol while the position tags 40 and the item tags 50 are RFID tags. In this case, the tag readers 100 are assumed to support both the RFID protocol and the NFC protocol. Generally speaking, each of the position tags 40, the item tags 50, and the user tags 60 may be any kind of wireless device capable of sending back identification information within it in response to a signal from a reader.

The management server 1200 is a server apparatus that manages item data indicating to which entity among two or more entities each item 30 belongs like the management server 200 according to the first embodiment.

### <2-2. Configuration Example of Management Server>

### <2-2-1. Basic Configuration>

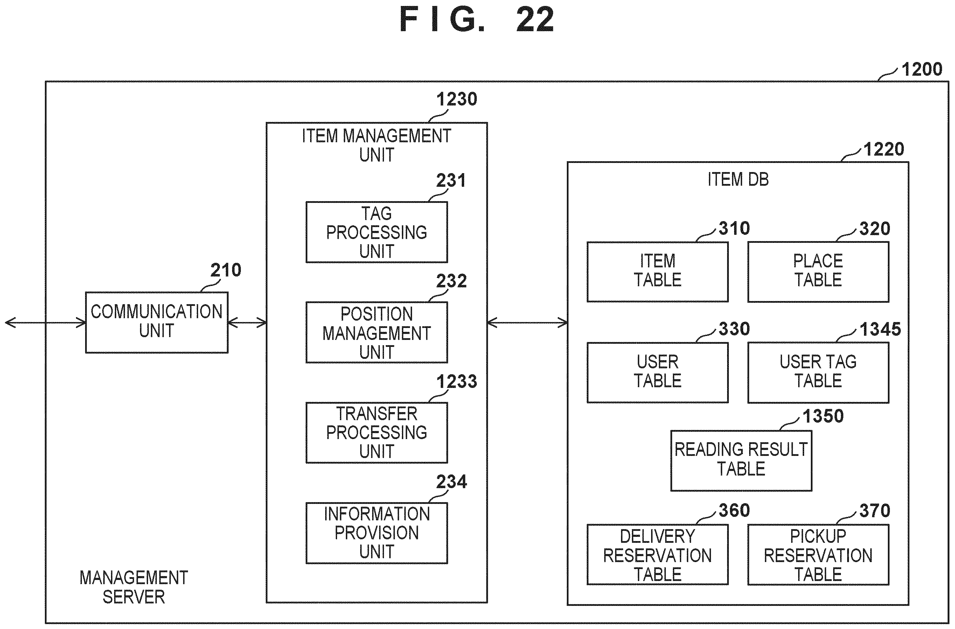

FIG. 22 is a block diagram illustrating an example of a configuration of the management server 1200 according to the second embodiment. With reference to FIG. 22, the management server 1200 includes a communication unit 210, an item DB 1220, and an item management unit 1230.

The item DB 1220 consists of tables for managing data indicating to which entity each of the items under the management of the system belongs as in the item DB 220 according to the first embodiment. In the present embodiment, the item DB 1220 includes an item table 310, a place table 320, a user table 340, a user tag table 1345, a reading result table 1350, a delivery reservation table 360, and a pickup reservation table 370. The item DB 1220 need not include the reader table 330.

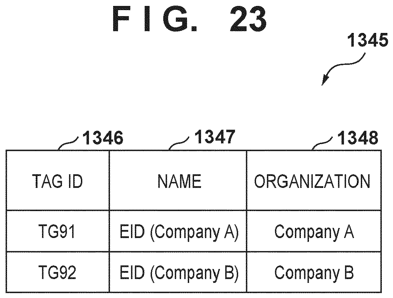

FIG. 23 illustrates an example of a configuration of the user tag table 1345 according to the present embodiment. The user tag table 1345 has three data elements including Tag ID 1346, Name 1347, and Organization 1348. Tag ID 1346 is identification information that uniquely identifies each user tag 60. The value of Tag ID 1346 is the same as the value of the tag ID stored within the corresponding user tag 60. Name 1347 represents a name of each user tag 60. Organization 1348 represents an entity which has responsibility for managing each user tag 60 (for example, a company to which the user 20 carrying the user tag 60 belongs). In the example of FIG. 23, 'Company A' has management responsibility for the user tag 60 identified by the tag ID 'TG91' (for example, user tag 60a) while 'Company B' has management responsibility for the user tag 60 identified by the tag ID 'TG92' (for example, user tag 60b).

The item management unit 1230 is a set of software modules that provide item management functions for managing data within the item DB 1220 like the item management unit 230 according to the first embodiment. In the present embodiment, the item management unit 1230 includes a tag processing unit 1231, a position management unit 232, a transfer processing unit 1233, and an information provision unit 234.

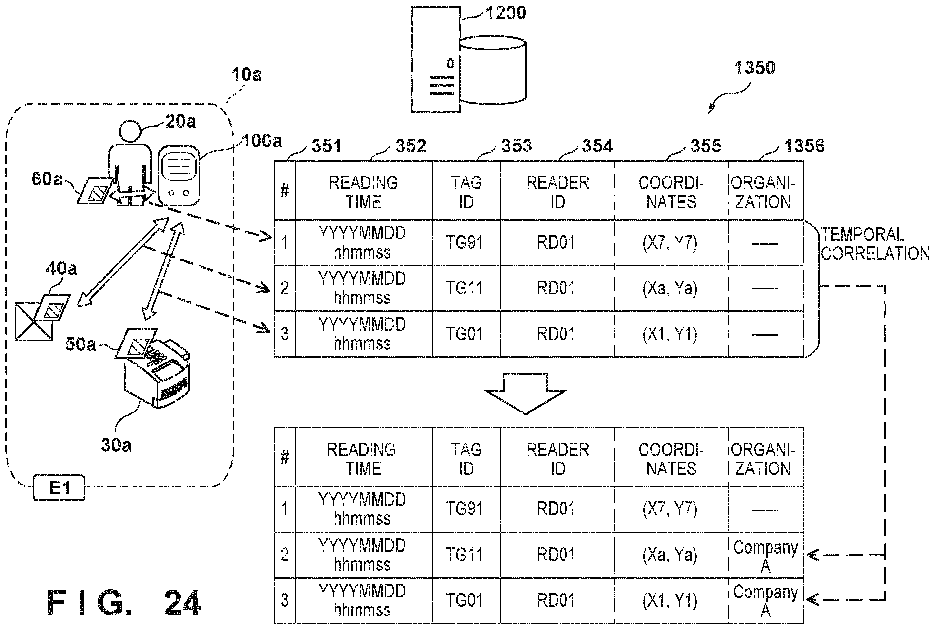

In the left side of FIG. 24, it is illustrated that the user 20a who carries the tag reader 100a visits the place 10a under the management of the entity E1 for an inventory operation in the present embodiment. When the user tag 60a has come within the reading range of the tag reader 100a, the tag reader 100a reads the tag ID `TG91' of the user tag 60a. Moreover, when the position tag 40a has come within the reading range, the tag reader 100a reads the tag ID 'TG1 1' of the position tag 40a. Furthermore, when the item tag 50a of the item 30a has come within the reading range, the tag reader 100a reads the tag ID 'TG01' of the item tag 50a. When a transmission timing of the reading result data arrives, the tag reader 100a transmits the reading result data indicative of the tag reading result (including three records here) to the management server 1200. The tag processing unit 1231 adds, to the reading result table 1350, the three records of the reading result data received via the communication unit 210.

As illustrated in the right side of FIG. 24, in the present embodiment, the reading result table 1350 has six data elements including Record Number 351, Reading Time 352, Tag ID 353, Reader ID 354, Coordinates 355, and Organization 1356. In the present embodiment, Reader ID 354 may be omitted from the reading result table 1350. When the reading result data is added to the reading result table 1350, the value of Organization 1356 may be null. For example, the tag processing unit 1231 determines that the reading time of the record #1 for the user tag 60a is little different from the reading times of the records #2 and #3 for the position tag 40a and the item tag 50a in the reading result data. Thus, the tag processing unit 1231 updates the values of Organization 1356 of the reading result records for the position tag 40a and the item tag 50a into a value indicating the entity associated with the user tag 60a in the user tag table 1345. In the example of FIG. 24, based on the temporal correlation between the reading result records, the organization name 'Company A', which is associated with the tag ID 'TG91' in the user tag table 1345, is added to the fields of Organization 1356 of the reading result records #2 and #3.

It should be noted that, when multiple users 20 are working at the same place 10, multiple reading result records for the user tags 60 of the different users 20 may be created for one reading result record for the item tag 50 (or position tag 40) (herein referred to as a target record). In this case, for example, the tag processing unit 1231 may determine the entity to be added to the field of Organization 1356 of the target record based on the reading result record for the user tag 60 that has been detected most often during a certain interval (for example, several seconds to tens of seconds) including the reading time of the target record.

In this way, the need to associate the reader ID with an entity in advance is eliminated by adopting the configuration for determining the relationship between the tag reading result and an entity based on (using the temporal correlation with) the result of reading from the user tag 60. Therefore, in the situation illustrated in the left side of FIG. 24, for example, the user 20a is not required to use the tag reader 100a, and may use an arbitrary tag reader 100 to perform the inventory operation. This can mitigate a burden for managing the tag readers 100 in the item management system 2.

### <2-2-2. Transfer of Item (Change of Entity to which Item Belongs)>

Also in the present embodiment, the transfer processing unit 1233 receives in advance, for both of the delivery and the pickup, reservation information which indicates that an operation to transfer an item 30 will be carried out. Then, the transfer processing unit 1233 changes the entity to which the item 30 belongs in the item DB 1220 based on the result of reading by at least one tag reader 100 and the received reservation information. A delivery reservation and a pickup reservation may be received in the same manner as described using FIGs. 6 and 11 in the first embodiment.

### (1) Transfer of Item by Delivery

For ease of explanation, it is also assumed here that a target item (for example, the item 30a) that belongs to a second entity (for example, Company A) related to a second position is transferred to a first entity (for example, Company B) related to a first position. Before a delivery operation is performed, the item table 310 indicates that the target item belongs to the second entity. Starting with this status, the transfer processing unit 1233 updates the item table 310 such that it indicates that the target item belongs to the first entity, provided that a first reading apparatus has read at least the following three tag IDs:
a) the tag ID of a user tag associated with the first entity;
b) the tag ID of the position tag of the first position; and
c) the tag ID of the item tag of the target item.
In the example where the user 20a delivers the item 30a to the place 10b to hand it over to the user 20b: a) the user tag associated with the first entity corresponds to the user tag 60b of the user 20b; b) the position tag of the first position corresponds to the position tag 40b; and c) the item tag of the target item corresponds to the item tag 50a of the item 30a. The above condition means that the tag reading result indicates that the target item has been appropriately handed over to the user on the first entity side at the place related to the first entity.

The above condition for changing the entity to which the target item belongs may additionally include that the first reading apparatus has read the following tag ID,
d) the tag ID of a user tag associated with the second entity.
In the above example where the user 20a delivers the item 30a to the place 10b to hand it over to the user 20b, d) the user tag associated with the second entity corresponds to the user tag 60a of the user 20a. This extended condition means that the tag reading result indicates that it is confirmed, in the presence of both the users of the first and second entities, that the target item has been handed over to the user on the first entity side at the place related to the first entity.

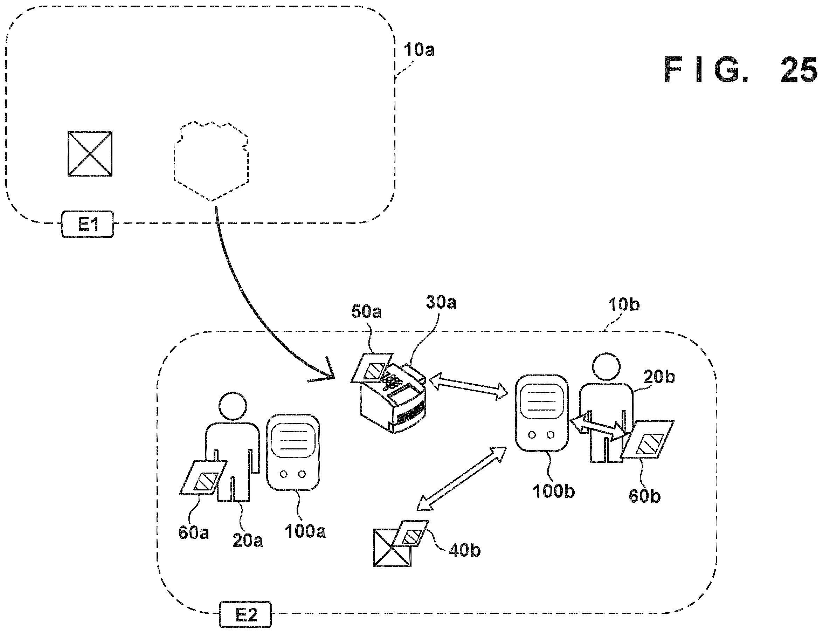

FIG. 25 is an explanatory diagram for explaining tag reading at the delivery operation in the present embodiment. In the example of FIG. 25, the target item of the delivery is the item 30a that belongs to the entity E1 and has been stored in the place 10a. The user 20a transports the item 30a to the place 10b on the expected delivery date. The user 20b receives the item 30a at the place 10b. For example, the tag reader 100b reads the tag ID of the user tag 60b of the user 20b, the tag ID of the position tag 40b, and the tag ID of the item tag 50a, and transmits the reading result data to the management server 1200. The tag processing unit 1231 of the management server 1200 stores the reading result data to the reading result table 1350 and adds a value indicating the entity E2 associated with the user tag 60b to the fields of Organization 1356 of the stored records.

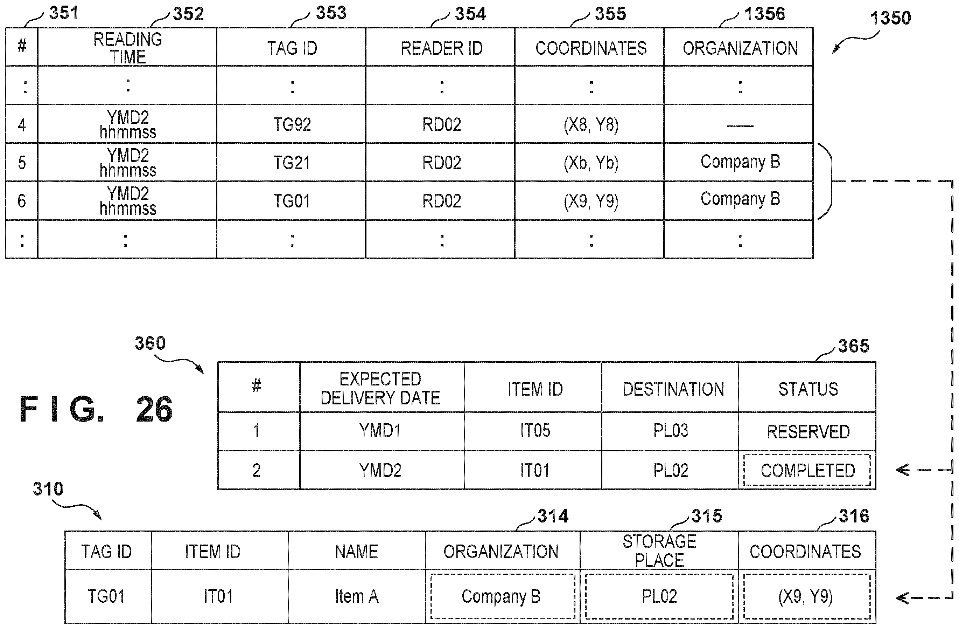

FIG. 26 is an explanatory diagram for explaining update of a delivery status based on the result of the tag reading described using FIG. 25. The reading result table 1350 in FIG. 26 has three records #4, #5, and #6 indicative of the result of the tag reading by the tag reader 100b in the example of FIG. 25. For example, the transfer processing unit 1233 refers to the delivery reservation table 360 and becomes aware that the item 30a identified by the item ID 'IT01' is expected to be delivered to the place 10b identified by Destination 'PL02' on the expected delivery date 'YMD2'. This delivery schedule says that the item 30a is to be transferred from the entity E1 (Company A), to which the item 30a currently belongs, to the entity E2 (Company B). The transfer processing unit 1233 knows, from the records #5 and #6 of the reading result table 1350, that the tag reader 100b which has read the tag ID of the user tag 60b has read the tag ID of the position tag 40b of the place 10b and the tag ID of the item tag 50a of the item 30a. The transfer processing unit 1233 determines, based on the reading results, that the expected delivery operation has been performed, and updates the value of Status 365 of the record #2 of the corresponding reservation information of the delivery reservation table 360 into 'Complete'. Moreover, the transfer processing unit 1233 updates the value of Organization 314 of the record of the item 30a of the item table 310 into `Company B'. The position management unit 232 updates the values of Storage Place 315 and Coordinates 316 of the record of the item 30a of the item table 310 into the latest values.

It should be noted that, though FIGs. 25 and 26 illustrate the example where the tag reader 100b reads the tag IDs from the RFID tags 60b, 40b, and 50a, the tag reader 100a may read the tag IDs from these three RFID tags. In addition, the transfer processing unit 1233 may change the entity to which the item 30a belongs, provided that the tag ID of the user tag 60a of the user 20a is also read (the above extended condition). In this case, it is confirmed from the tag reading results that the delivery operation has been performed in the presence of both the users of the transfer source entity and the transfer destination entity. Thus, it is possible to change the entity to which the target item belongs with surely preventing the parties concerned in the transfer from missing each other.

As in the first embodiment, the transfer processing unit 1233 changes the entity to which the target item belongs based not only on the tag reading result but also on the delivery reservation information indicating that the operation to move the target item to the destination will be carried out. Therefore, also in the present embodiment, if the tag ID of an item on the way of transport is unintentionally read at a place other than the destination or if the item is taken into an inappropriate place by a third party, it is possible to prevent a situation where the entity to which the item belongs is incorrectly changed.

### (2) Transfer of Item by Pickup

For ease of explanation, it is also assumed here that a target item (for example, the item 30a) that belongs to a first entity (for example, Company B) related to a first position is transferred through a pickup operation to a second entity (for example, Company A) related to a second position. Before the pickup operation is performed, the item table 310 indicates that the target item belongs to the first entity. Starting with this status, the transfer processing unit 1233 changes the entity to which the target item belongs to the second entity, provided that a second reading apparatus associated with the second entity has read the tag ID of the position tag of the first position and the tag ID of the item tag of the target item. In the present embodiment, the state where the second reading apparatus is associated with the second entity means that the second reading apparatus has read the tag ID of a user tag associated with the second entity. In the example where the user 20a who is a person-in-charge of Company A picks up the item 30a stored in the place 10b, the tag reader 100a or 100b that has read the tag ID of the user tag 60a of the user 20a corresponds to the second reading apparatus. The position tag of the first position corresponds to the position tag 40b, and the item tag of the target item corresponds to the item tag 50a. The above condition means that the tag reading result indicates that a person-in-charge of the legitimate pickup party has visited the appropriate place to pick up the target item.

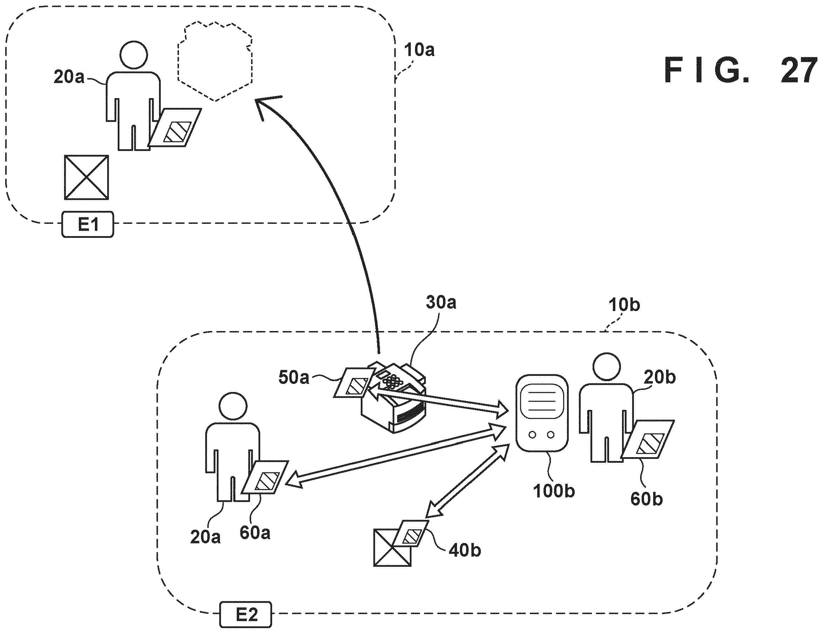

FIG. 27 is an explanatory diagram for explaining tag reading at the pickup operation in the present embodiment. In the example of FIG. 27, the target item of the pickup is the item 30a that belongs to the entity E2 and is stored in the place 10b. The user 20a visits the place 10b and picks up the item 30a on the expected pickup date. For example, while the user 20a stays at the place 10b, the tag reader 100b reads the tag ID of the user tag 60a, the tag ID of the position tag 40b, and the tag ID of the item tag 50a, and transmits the reading result data to the management server 1200. The tag processing unit 1231 of the management server 1200 stores the reading result data to the reading result table 1350 and adds a value indicating the entity E1 associated with the user tag 60a to the fields of Organization 1356 of the stored records.

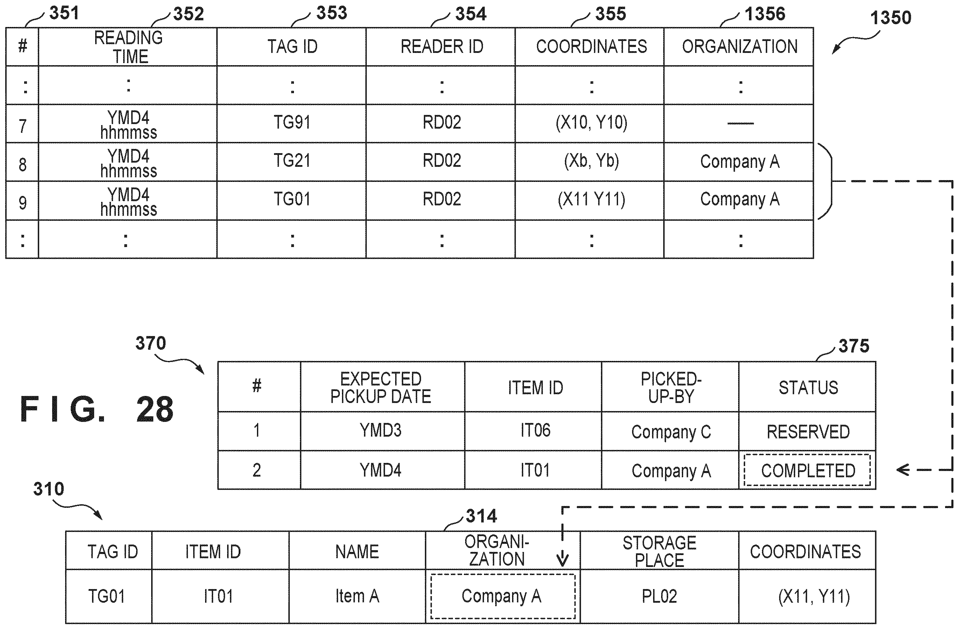

FIG. 28 is an explanatory diagram for explaining update of a pickup status based on the result of the tag reading described using FIG. 27. The reading result table 1350 in FIG. 28 has three records #7, #8, and #9 indicative of the result of the tag reading by the tag reader 100b at the place 10b in the example of FIG. 27. For example, the transfer processing unit 1233 refers to the pickup reservation table 370 and becomes aware that the item 30a identified by the item ID 'IT01' is expected to be picked up by a person-in-charge of the entity E1, which is Company A, on the expected pickup date `YMD4'. This pickup schedule says that the item 30a is to be transferred from the entity E2 (Company B), to which the item 30a currently belongs, to the entity E1 (Company A). The transfer processing unit 1233 knows, from the records #8 and #9 of the reading result table 1350, that the tag reader 100b which has read the tag ID of the user tag 60a has read the tag ID of the position tag 40b and the tag ID of the item tag 50a. The transfer processing unit 1233 determines, based on this reading result, that the expected pickup operation has been performed, and updates the value of Status 375 of the record #2 of the corresponding reservation information of the pickup reservation table 370 into 'Complete'. Moreover, the transfer processing unit 1233 updates the value of Organization 314 of the record of the item 30a of the item table 310 into `Company A', which is the name of the entity E1.

According to such an embodiment, the entity to which the target item belongs can be changed after an appropriate execution of the pickup operation by the user associated with the transfer destination entity is confirmed from the tag reading result.

As in the first embodiment, the transfer processing unit 1233 changes the entity to which the target item belongs based not only on the tag reading result but also on the pickup reservation information indicating that a person-in-charge of the pickup party will perform the operation to pick up the target item from the current storage place. Therefore, if an item is incorrectly handed over to an illegitimate third party who carries the user tag 60, it is possible to prevent a situation where the entity to which the item belongs is changed accordingly.

It should be noted that, in both the delivery and pickup cases, the transfer processing unit 1233 according to the present embodiment may also determine the correspondence between the tag IDs read from two or more tags based on the temporal correlation between reading results received from the same tag reader 100.

### <2-3. Process Flow>

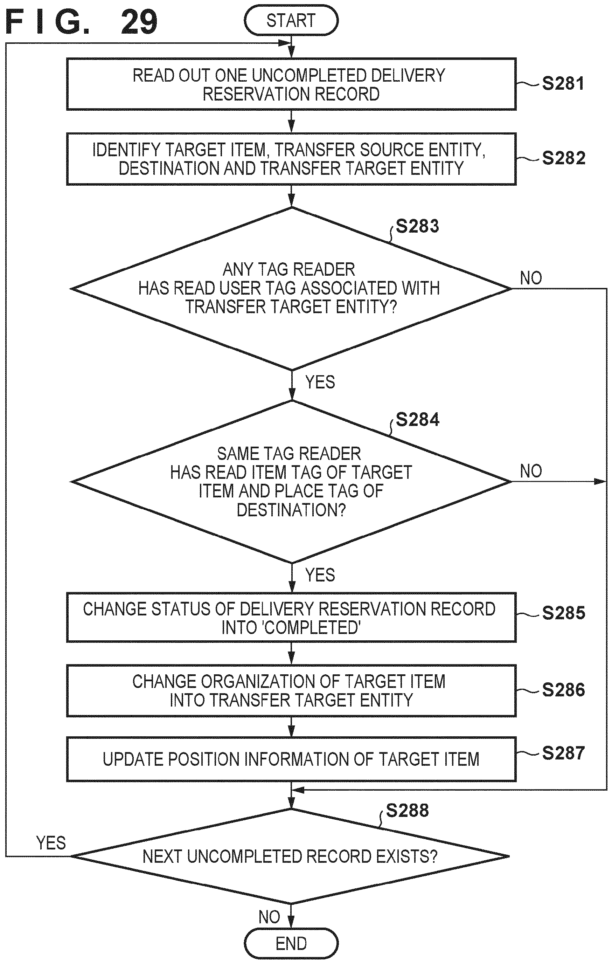

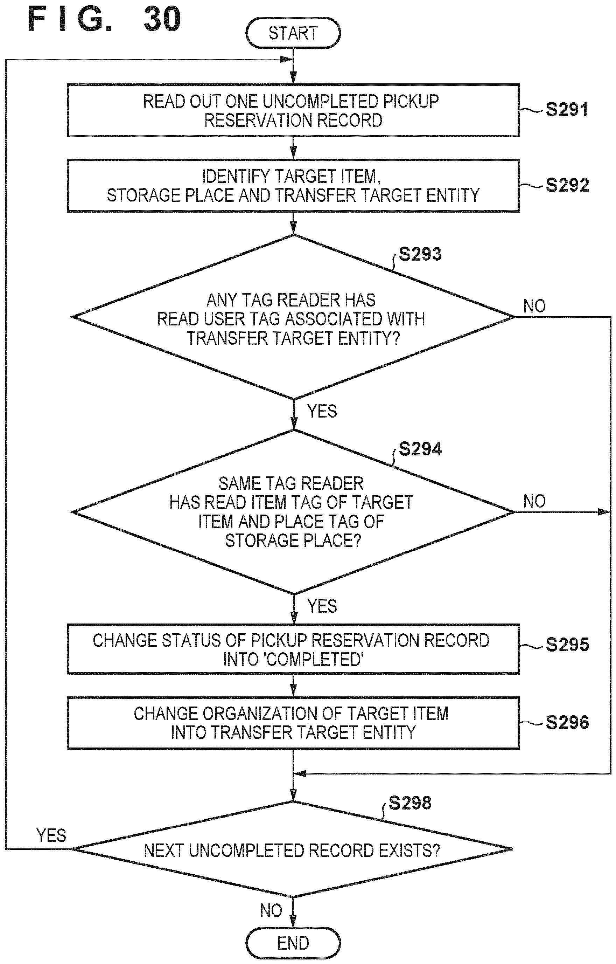

In this section, examples of process flows in the item management system 2 according to the present embodiment will be described using flow charts in FIGs. 29 and 30.

### <2-3-1. Delivery Status Update Process>

FIG. 29 is a flow chart illustrating an example of a flow of a delivery status update process according to the second embodiment.

First, in S281, the transfer processing unit 1233 reads an uncompleted delivery reservation record from the delivery reservation table 360. It should be noted that only a record indicating a date before a current day as the expected delivery date may be subject to the reading by the transfer processing unit 1233. Next, in S282, the transfer processing unit 1233 identifies the delivery target item, the transfer source entity, the destination, and the transfer destination entity from the read record and the master data of the item DB 1220.

Then, in S283, the transfer processing unit 1233 refers to the reading result table 1350 to determine whether any tag reader 100 has read the tag ID of a user tag associated with the transfer destination entity. For example, when the reading result table 1350 has a record of which Organization 1356 has a value indicating the transfer destination entity, it is determined that the tag ID of a user tag associated with the transfer destination entity has been read, and the process proceeds to S284. When no such record exists, the process proceeds to S288.

In S284, the transfer processing unit 1233 further determines whether the same tag reader 100 (tag reader 100 which has read the tag ID of the user tag associated with the transfer destination entity) has read the tag ID of the item tag of the target item and the tag ID of the position tag of the destination. When it is determined that the tag reader 100 has read the tag ID of the item tag of the target item and the tag ID of the position tag of the destination, the process proceeds to S285. When these tag IDs have not been read, the process proceeds to S288.

In S285, the transfer processing unit 1233 changes the status of the delivery reservation record read in S281 to 'Complete'. Then, in S286, the transfer processing unit 1233 changes the value of Organization 314 of the target item record of the item table 310 to a value indicating the transfer destination entity.

Then, in S287, the position management unit 232 updates the values of Storage Place 315 and Coordinates 316 of the target item record of the item table 310 into the respective latest values.

Then, in S288, the transfer processing unit 1233 determines whether the delivery reservation table 360 still has another uncompleted delivery reservation record to be processed next. If there remains a next delivery reservation record, the process returns to S281, and the next delivery reservation record is also processed in S281 to S287 as described above. When the next delivery reservation record does not remain, the delivery status update process of FIG. 29 ends, and the transfer processing unit 1233 stands by until a next processing timing.

### <2-3-2. Pickup Status Update Process>

FIG. 30 is a flow chart illustrating an example of a flow of a pickup status update process according to the second embodiment.

First, in S291, the transfer processing unit 1233 reads an uncompleted pickup reservation record from the pickup reservation table 370. It should be noted that only a record indicating a date before a current day as the expected pickup date may be subject to the reading by the transfer processing unit 1233. Next, in S292, the transfer processing unit 1233 identifies the pickup target item, the current storage place of the target item (pickup place), and the transfer destination entity (pickup party) from the read record and the master data of the item DB 1220.

Then, in S293, the transfer processing unit 1233 refers to the reading result table 1350 to determine whether any tag reader 100 has read the tag ID of a user tag associated with the transfer destination entity. For example, when the reading result table 1350 has a record of which Organization 1356 has a value indicating the transfer destination entity, it is determined that the tag ID of a user tag associated with the transfer destination entity has been read, and the process proceeds to S294. When no such record exists, the process proceeds to S298.

In S294, the transfer processing unit 1233 further determines whether the same tag reader 100 (tag reader 100 which has read the tag ID of the user tag associated with the transfer destination entity) has read the tag ID of the item tag of the target item and the tag ID of the position tag of the storage place. When it is determined that the tag reader 100 has read the tag ID of the item tag of the target item and the tag ID of the position tag of the storage place, the process proceeds to S295. When these tag IDs have not been read, the process proceeds to S298.

In S295, the transfer processing unit 1233 changes the status of the pickup reservation record read in S291 to 'Complete'. Then, in S296, the transfer processing unit 1233 changes the value of Organization 314 of the target item record of the item table 310 to a value indicating the transfer destination entity.

Then, in S298, the transfer processing unit 1233 determines whether the pickup reservation table 370 still has another uncompleted pickup reservation record to be processed next. If there remains a next pickup reservation record, the process returns to S291, and the next pickup reservation record is also processed in S291 to S296 as described above. When the next pickup reservation record does not remain, the pickup status update process of FIG. 30 ends, and the transfer processing unit 1233 stands by until a next processing timing.

### <2-4. Summary>

According to the second embodiment, the item management system that manages a change (that is, transfer) of an entity to which an item belongs incorporates a first wireless device installed at a first position, a second wireless device that moves together with the item, and a reading apparatus that reads identification information from the wireless devices. The first position is located in a place related to a first entity, and a second position is located in a place related to a second entity. In a case where the item which belongs to the second entity is delivered to the first position, when the reading apparatus has read:
▪ identification information of a user device associated with the first entity (for example, the tag ID of a user tag);
▪ identification information of the first wireless device (for example, the tag ID of the position tag); and
▪ identification information of the second wireless device (for example, the tag ID of the item tag),
the management unit of the item management system updates the entity to which the item belongs in the item data from the second entity to the first entity.

In a case where the item which belongs to the first entity is picked up at the first position and thereby transferred to the second entity, when the reading apparatus has read:
▪ identification information of a user device associated with the second entity (for example, the tag ID of a user tag);
▪ identification information of the first wireless device (for example, the tag ID of the position tag); and
▪ identification information of the second wireless device (for example, the tag ID of the item tag),
the management unit of the item management system updates the entity to which the item belongs in the item data from the first entity to the second entity.

With this configuration, it is determined to which entity the user involved in the operation belongs based on the tag reading result from the user device. Therefore, any reading apparatus (for example, reading apparatus that is not for a specific entity) can be used for the tag reading. This can mitigate the burden of managing reading apparatuses and make the item management further more efficient.

### <3. Alteration Example>

The features of the first and second embodiments described above may be combined in any way with each other. Moreover, an alteration example described below may be combined with the above features.

### <3-1. Control of Tag Reading Range>

In an alteration example, each tag reader 100 may be configured to shorten its reading range in response to a user operation. As an example, a normal (unshortened) reading range is within a radius of several meters (for example, 5 m) around an antenna 115 of the tag reader 100, and a shortened reading range may be within a radius of a meter or less (for example, 1 m) around the antenna 115. A management server 200 may change the entity to which an item belongs in an item DB 220 based on reading result data indicative of a reading result obtained by the tag reader 100 in a state where its reading range is shortened in response to a user operation.

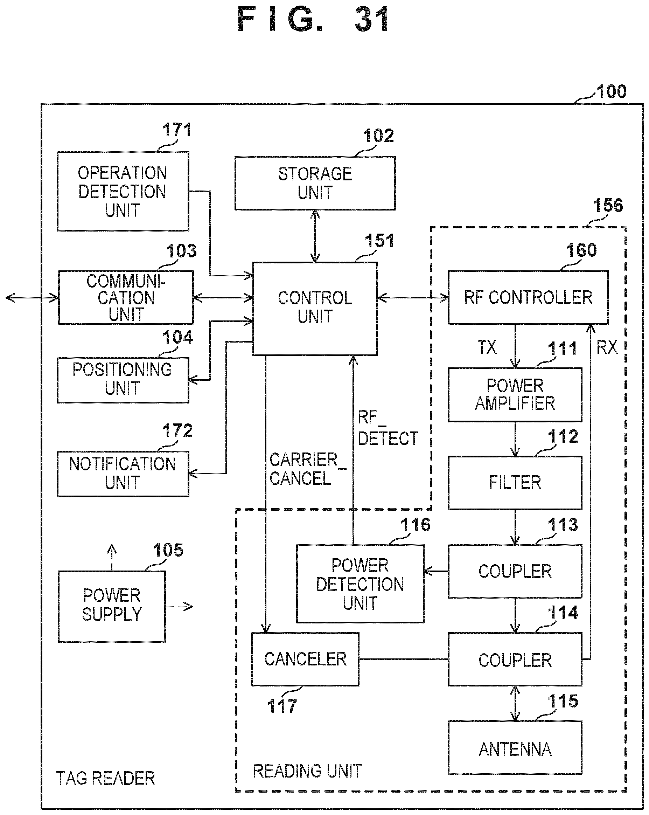

FIG. 31 is a block diagram illustrating an example of a configuration of the tag reader 100 according to this alteration example. With reference to FIG. 31, the tag reader 100 includes a control unit 151, a storage unit 102, a communication unit 103, a positioning unit 104, a power supply 105, a reading unit 156, an operation detection unit 171, and a notification unit 172.

The control unit 151 consists of a memory to store computer programs, and one or more processors to execute the computer programs. The control unit 151 controls overall functionality of the tag reader 100 as in the control unit 101 according to the embodiments described above.

The reading unit 156 is a reading module that is capable of reading identification information stored in each RFID tag that exists in the system. A difference from the reading unit 106 illustrated in FIG. 2 is that the reading unit 156 includes an RF controller 160. The RF controller 160 causes a power amplifier 111 to output a transmission signal with a power variably set in accordance with control by the control unit 151 to a filter 112. The RF controller 160 demodulates a signal input from an RX terminal to obtain a tag ID and other information sent back from an RFID tag, and outputs the obtained information to the control unit 151.

The operation detection unit 171 detects an operation state (pressed/not pressed) of a button (not shown) provided on a body of the tag reader 100, for example, and outputs a detection signal indicative of the detected operation state to the control unit 151.

When the detection signal from the operation detection unit 171 indicates that the button is not pressed, the control unit 151 sets the power of the transmission signal transmitted from the reading unit 156 to a normal value, and thereby adjusts the reading range of the tag reader 100 to the normal range. Meanwhile, when the detection signal from the operation detection unit 171 indicates that the button is pressed, the control unit 151 sets the power of the transmission signal transmitted from the reading unit 156 to a smaller value, and thereby adjusts the reading range of the tag reader 100 to the shortened range.

When a result of tag reading by the reading unit 156 is stored in the storage unit 102 or transmitted to the management server 200, the control unit 151 adds a flag indicative of the operation state of the button at the reading to the reading result data. This flag has a role of identifying whether each reading result record represents a reading result with the normal reading range or a reading result with the shortened reading range.

The notification unit 172 is a device for notifying a user of a status of tag reading being performed by the tag reader 100. The notification unit 172 may include, for example, a light-emitting diode (LED) that emits light in accordance with control by the control unit 151. In this case, the control unit 151 may cause the notification unit 172 to emit light with different light-emission patterns (for example, emission color, blinking frequency, blinking cycle, or the like) for a period when the tag reading is attempted with the normal reading range and a period when the tag reading is attempted with the shortened reading range. In addition, the control unit 151 may cause the notification unit 172 to emit light with a specific light-emission pattern in a case of detection of a received signal from an RFID tag. It should be noted that the notification unit 172 may include another notification device such as a speaker or a vibrator instead of (or in addition to) the LED.

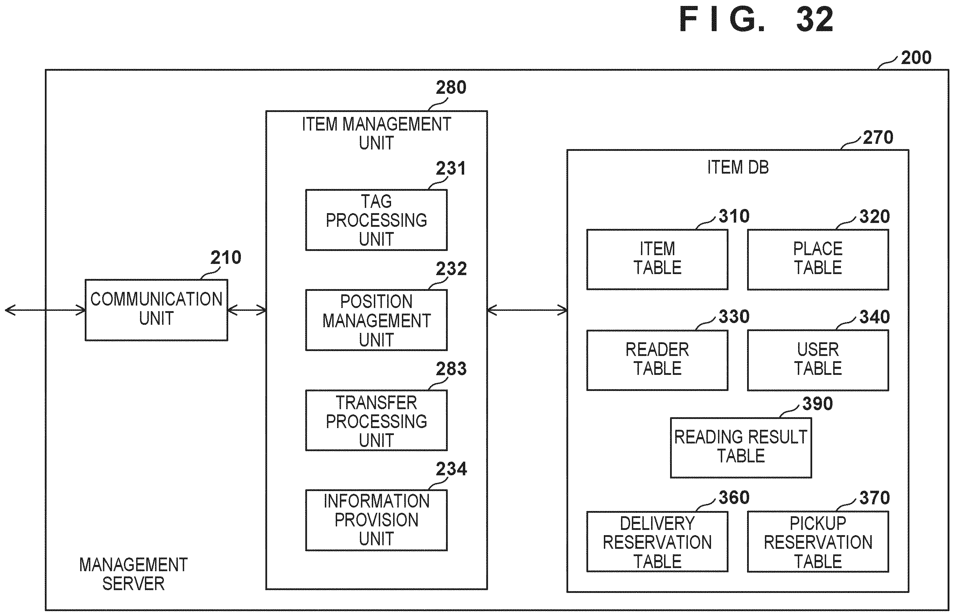

FIG. 32 is a block diagram illustrating an example of a configuration of the management server 200 according to this alteration example. With reference to FIG. 32, the management server 200 includes a communication unit 210, an item DB 270, and an item management unit 280. The item DB 270 has a reading result table 390 instead of the reading result table 350 of the item DB 220 illustrated in FIG. 3. The item management unit 280 has a transfer processing unit 283 instead of the transfer processing unit 233 of the item management unit 230 illustrated in FIG. 3.

In this alteration example, the transfer processing unit 283 changes the entity to which an item belongs in the item DB 270 based on reading result data obtained in a state where the reading range is shortened in response to the user operation. The other functions of the transfer processing unit 283 may be similar to those of the transfer processing unit 233 according to the first embodiment or the transfer processing unit 1233 according to the second embodiment.

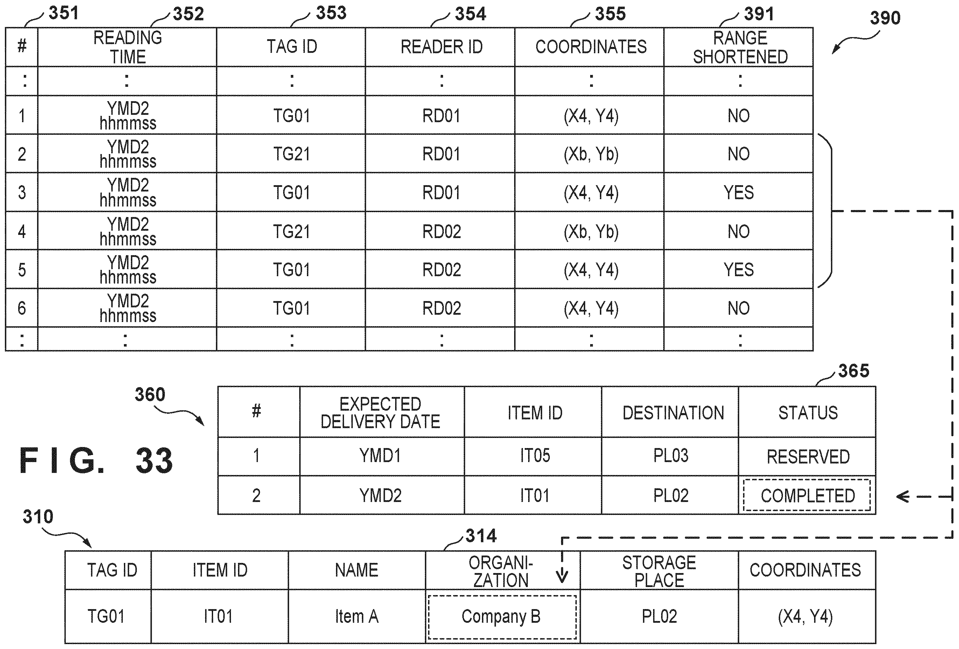

FIG. 33 is an explanatory diagram for explaining the change of the entity to which the item belongs in this alteration example. Herein, as an example, the delivery operation described using FIG. 7 is assumed to be performed. The target item of the delivery is the item 30a which belongs to the entity E1. The user 20a delivers the item 30a to the place 10b and the user 20b receives the item 30a at the place 10b. The tag reader 100a carried by the user 20a reads the tag ID of the position tag 40b. While the user 20a presses the button of the tag reader 100a, the tag reader 100a reads the tag ID of the item tag 50a of the item 30a. Note that, even while the button is not pressed, the tag reader 100a reads the tag ID of the item tag 50a of the item 30a.

The upper part of FIG. 33 illustrates the reading result table 390 of the management server 200 that stores records #1, #2, and #3 indicative of the result of such tag reading. The reading result table 390 has Range Shortening 391 as an additional data element in addition to the five data elements of the reading result table 350 illustrated in FIG. 5. The value of Range Shortening 391 of the record #1 is 'No', which means that the reading range of the tag reader 100a is not shortened at the reading of the tag ID 'TG01' of the item tag 50a indicated by this record. The value of Range Shortening 391 of the record #2 is 'No', which means that the reading range of the tag reader 100a is not shortened at the reading of the tag ID `TG21' of the position tag 40a indicated by this record. The value of Range Shortening 391 of the record #3 is `Yes', which means that the reading range of the tag reader 100a is shortened at the reading of the tag ID 'TG01' of the item tag 50a indicated by this record.

Similarly, the tag reader 100b carried by the user 20b also reads the tag ID of the position tag 40b. While the user 20b presses the button of the tag reader 100b, the tag reader 100b reads the tag ID of the item tag 50a of the item 30a. Note that, even while the button is not pressed, the tag reader 100b reads the tag ID of the item tag 50a of the item 30a. The reading result table 390 of FIG. 33 also stores records #4, #5, and #6 indicative of the result of such tag reading.

For example, the transfer processing unit 283 refers to the delivery reservation table 360, and becomes aware that the item 30a is expected to be delivered to the place 10b and thereby transferred from the entity E1 to the entity E2 on the expected delivery date 'YMD2'. The transfer processing unit 283 ignores the records #1 and #6 of the reading result table 390 indicative of results of reading from the item tag 50a with the normal reading range, and determines, based on the contents of the records #2 to #5, that the expected delivery operation has been performed. Then, the transfer processing unit 283 updates the value of Status 365 of the record #2 of the corresponding reservation information of the delivery reservation table 360 into 'Complete'. Moreover, the transfer processing unit 283 updates the value of Organization 314 of the record of the item 30a of the item table 310 into `Company B', which is the name of the entity E2.

According to such an alteration example, in a situation where a large number of items are stored in one place, it is possible to reduce candidates of a transfer target item based on the explicit user operation and then efficiently update the entity to which the target item belongs. It should be noted that, in the above example, it is not required for determining the transfer that the reading range is shortened (Range Shortening 391 indicates `Yes') at the reading from the position tag 40. The reason of this is that only one position tag 40 is normally installed at each place and thus the position tag 40 is not always present at a very close range from the user at the delivery or pickup operation by the user. However, in another example, it may also be required for determining the transfer that the reading range is shortened (the button is pressed) at the reading from the position tag 40.

For update of the data other than the change of the entity to which an item belongs (for example, update of the position information by the position management unit 232), the item management unit 280 may utilize all the reading result records regardless of whether the reading range is shortened. This can balance simple management, where the item-related information under management is kept up to date just by a user carrying the tag reader 100, and data maintenance measures, where the item transfer between entities is triggered by the explicit operation.

### <3-2. Other Alteration Examples>

When it is determined that the operation for transferring an item has been performed in accordance with the above-described conditions, the management server 200 or 1200 may request a user's approval of the transfer, and may change the entity to which the item belongs after receiving the approval. The transfer approval may be requested and given via a user interface of any device operated by the user, such as the tag reader 100 or the user terminal 300. The transfer approval may be requested from one or both of the user of the transfer source entity and the user of the transfer destination entity.

The item-related information maintained by the database in the above embodiments may be used not only for providing information to a user but also for various purposes. For example, the management server 200 or 1200 may provide the item-related information to another system such as an accounting system, a business form system, or an item procurement planning system.

### <4. Other Embodiments>

The above embodiments can be implemented by processing of supplying a program for implementing one or more functions to a system or apparatus via a network or storage medium, and causing one or more processors in the computer of the system or apparatus to read out and execute the program. They can also be implemented by a circuit (for example, an ASIC) for implementing one or more functions.

The invention is not limited to the above embodiments and various changes and modifications can be made within the spirit and scope of the invention. Therefore, to apprise the public of the scope of the invention, the following claims are attached.

The present application claims priority from Japanese Patent Application No. 2021-061655 filed on March 31, 2021, which is hereby incorporated by reference herein in its entirety.

## Claims

1. An item management system for managing item data that indicates an entity to which an item belongs among a plurality of entities comprising:
a first wireless device installed at a first position;
a second wireless device that moves together with the item;
at least one reading apparatus that reads identification information stored in a wireless device; and
a management unit configured to manage the item data;
wherein, in a state where the item data indicates that the item belongs to a second entity related to a second position which is different from the first position, the management unit is configured to update the item data such that the item data indicates that the item belongs to a first entity related to the first position provided that a first reading apparatus has read identification information of the first wireless device and identification information of the second wireless device.

2. The item management system according to claim 1, wherein, in a state where the item data indicates that the item belongs to the second entity, the management unit is configured to,
provided that a second reading apparatus associated with the second entity has read identification information of the first wireless device and identification information of the second wireless device and the first reading apparatus associated with the first entity has read identification information of the first wireless device and identification information of the second wireless device,
update the item data such that the item data indicates that the item belongs to the first entity.

3. The item management system according to claim 1, wherein the first reading apparatus is a reading apparatus that has read identification information of a first user device associated with the first entity.

4. The item management system according to any one of claims 1 to 3, wherein each reading apparatus is configured to shorten a reading range in response to a user operation, and
the management unit is configured to change an entity to which the item belongs in the item data based on a reading result obtained in a state where the reading range is shortened in response to the user operation.

5. The item management system according to any one of claims 1 to 4, wherein the management unit is configured to:
receive reservation information indicating that an operation to transfer the item between entities will be carried out, and
change an entity to which the item belongs in the item data based on a result of reading at least by the first reading apparatus and the received reservation information.

6. The item management system according to claim 5, wherein the management unit is configured to update the item data such that the item data indicates that the item belongs to the first entity based on a result of reading at least by the first reading apparatus and on the reservation information indicating that an operation to move the item to the first position will be carried out.

7. The item management system according to any one of claims 1 to 6, wherein each reading apparatus is configured to transmit, to the management unit, a result of reading including identification information read from a wireless device and a time of the reading, and
the management unit is configured to determine correspondence between pieces of identification information read from two or more wireless devices based on temporal correlation between reading results received from a same reading apparatus.

8. The item management system according to any one of claims 1 to 7,
wherein each of the first entity and the second entity is one of an owner of an item, a user of an item, a manager of an item, a place to store an item, and a location of an item.

9. The item management system according to any one of claims 1 to 8, wherein the management unit is configured to provide a user terminal of a user associated with each entity with information related to an item which belongs to that entity based on the item data.

10. The item management system according to claim 9, wherein the information provided to the user terminal includes position information of each item.

11. The item management system according to any one of claims 1 to 10, wherein the wireless device is a radio frequency identification (RFID) tag, and
the reading apparatus is configured to emit an electromagnetic wave to a reading range and read the identification information sent back from the RFID tag utilizing energy of the electromagnetic wave.

12. The item management system according to any one of claims 1 to 11, comprising
a server apparatus arranged in a cloud environment and comprising the management unit,
wherein each reading apparatus comprises a communication unit configured to transmit a result of reading to the server apparatus directly or indirectly via another apparatus.

13. An item management method for managing item data that indicates an entity to which an item belongs among a plurality of entities, the method comprising, in a state where the item data indicates that the item belongs to a second entity related to a second position:
reading, by a first reading apparatus, identification information from a first wireless device installed at a first position;
reading, by the first reading apparatus, identification information from a second wireless device that has moved to the first position together with the item;
transmitting, by the first reading apparatus to a management unit configured to manage the item data, reading result data indicating that the first reading apparatus has read identification information of the first wireless device and identification information of the second wireless device; and
updating, by the management unit, the item data such that the item data indicates that the item belongs to a first entity related to the first position based on the reading result data received from the first reading apparatus.

14. A reading apparatus comprising:
a reading unit capable of reading, from a first wireless device installed at a first position out of a plurality of positions and from a second wireless device that moves together with an item, identification information stored in each wireless device; and
a communication unit configured to communicate with an information processing apparatus that manages item data indicating an entity to which the item belongs among a plurality of entities;
wherein, in a case where the reading unit has read identification information of the first wireless device and identification information of the second wireless device, the communication unit is configured to transmit a result of reading by the reading unit to the information processing apparatus to cause the information processing apparatus to change an entity to which the item belongs in the item data from a second entity related to a second position that is different from the first position to a first entity related to the first position.

15. An information processing apparatus that manages item data indicating an entity to which an item belongs among a plurality of entities comprising:
a communication unit configured to communicate with at least one reading apparatus capable of reading, from a first wireless device installed at a first position out of a plurality of positions and from a second wireless device that moves together with the item, identification information stored in each wireless device; and
a management unit configured to, in a state where the item data indicates that the item belongs to a second entity related to a second position that is different from the first position, update the item data such that the item data indicates that the item belongs to a first entity related to the first position provided that the communication unit has received reading result data indicating that a first reading apparatus has read identification information of the first wireless device and identification information of the second wireless device.

16. An item management system for managing item data that indicates an entity to which an item belongs among a plurality of entities comprising:
a first wireless device installed at a first position;
a second wireless device that moves together with the item;
at least one reading apparatus that reads identification information stored in a wireless device; and
a management unit configured to manage the item data;
wherein, in a state where the item data indicates that the item belongs to a first entity related to the first position, the management unit is configured to update the item data such that the item data indicates that the item belongs to a second entity provided that a second reading apparatus associated with the second entity has read identification information of the first wireless device and identification information of the second wireless device,
wherein the second reading apparatus being associated with the second entity includes at least one of:
existence of data which associates the second reading apparatus with the second entity, or
the second reading apparatus having read identification information of a user device associated with the second entity.

17. The item management system according to claim 16, wherein each reading apparatus is configured to shorten a reading range in response to a user operation, and
the management unit is configured to change an entity to which the item belongs in the item data based on a reading result obtained in a state where the reading range is shortened in response to the user operation.

18. The item management system according to claim 16 or 17, wherein the management unit is configured to:
receive reservation information indicating that an operation to transfer the item between entities will be carried out, and
change an entity to which the item belongs in the item data based on a result of reading at least by the second reading apparatus and the received reservation information.

19. The item management system according to claim 18, wherein the management unit is configured to update the item data such that the item data indicates that the item belongs to the second entity based on the result of reading at least by the second reading apparatus and on the reservation information indicating that an operation to pick up the item from the first position will be carried out by a user associated with the second entity.

20. The item management system according to any one of claims 16 to 19, wherein each reading apparatus is configured to transmit, to the management unit, a result of reading including identification information read from a wireless device and a time of the reading, and
the management unit is configured to determine correspondence between pieces of identification information read from two or more wireless devices based on temporal correlation between reading results received from a same reading apparatus.

21. The item management system according to any one of claims 16 to 20, wherein each of the first entity and the second entity is one of an owner of an item, a user of an item, a manager of an item, a place to store an item, and a location of an item.

22. The item management system according to any one of claims 16 to 21, wherein the management unit is configured to provide a user terminal of a user associated with each entity with information related to an item which belongs to that entity based on the item data.

23. The item management system according to claim 22, wherein the information provided to the user terminal includes position information of each item.

24. The item management system according to any one of claims 16 to 23, wherein the wireless device is a radio frequency identification (RFID) tag, and
the reading apparatus is configured to emit an electromagnetic wave to a reading range and read the identification information sent back from the RFID tag utilizing energy of the electromagnetic wave.

25. The item management system according to any one of claims 16 to 24, comprising
a server apparatus arranged in a cloud environment and comprising the management unit,
wherein each reading apparatus comprises a communication unit configured to transmit a result of reading to the server apparatus directly or indirectly via another apparatus.

26. An item management method for managing item data that indicates an entity to which an item belongs among a plurality of entities, the method comprising, in a state where the item data indicates that the item belongs to a first entity related to a first position:
reading, by a second reading apparatus associated with a second entity, identification information from a first wireless device installed at the first position;
reading, by the second reading apparatus, identification information from a second wireless device that moves together with the item;
transmitting, by the first reading apparatus to a management unit configured to manage the item data, reading result data indicating that the second reading apparatus has read identification information of the first wireless device and identification information of the second wireless device; and
updating, by the management unit, the item data such that the item data indicates that the item belongs to the second entity based on the reading result data received from the second reading apparatus,
wherein the second reading apparatus being associated with the second entity includes at least one of:
existence of data which associates the second reading apparatus with the second entity, or
the second reading apparatus having read identification information of a user device associated with the second entity.

27. A reading apparatus comprising:
a reading unit capable of reading, from a first wireless device installed at a first position out of a plurality of positions and from a second wireless device that moves together with an item, identification information stored in each wireless device; and
a communication unit configured to communicate with an information processing apparatus that manages item data indicating an entity to which the item belongs among a plurality of entities;
wherein the reading apparatus is associated with a second entity by at least one of
existence of data which associates the reading apparatus with the second entity, or
the reading apparatus reading identification information of a user device associated with the second entity, and
wherein, when the reading unit has read identification information of the first wireless device and identification information of the second wireless device, the communication unit is configured to transmit a result of reading by the reading unit to the information processing apparatus to cause the information processing apparatus to change an entity to which the item belongs in the item data from a first entity related to the first position to the second entity.

28. An information processing apparatus that manages item data indicating an entity to which an item belongs among a plurality of entities, comprising:
a communication unit configured to communicate with at least one reading apparatus capable of reading, from a first wireless device installed at a first position out of a plurality of positions and from a second wireless device that moves together with the item, identification information stored in each wireless device; and
a management unit configured to, in a state where the item data indicates that the item belongs to a first entity related to the first position, update the item data such that the item data indicates that the item belongs to a second entity provided that the communication unit has received reading result data indicating that a second reading apparatus associated with the second entity has read identification information of the first wireless device and identification information of the second wireless device,
wherein the second reading apparatus being associated with the second entity includes at least one of:
existence of data which associates the second reading apparatus with the second entity, or
the second reading apparatus having read identification information of a user device associated with the second entity.
